# EUROPÄISCHE PATENTSCHRIFT

(11) **EP 2 976 627 B1**
(45) Veröffentlichungstag und Bekanntmachung des Hinweises auf die Patenterteilung: **16.08.2023**
(21) Anmeldenummer: 14712251.9
(22) Anmeldetag: 18.03.2014
(51) Int. Cl.: G01N 23/2255, G01N 23/046, G01N 1/32, G02B 21/00

(54) **VERFAHREN ZUR ERZEUGUNG VON BILDDATEN EINES OBJEKTS**
METHOD FOR GENERATING IMAGE DATA RELATING TO AN OBJECT
PROCÉDÉ DE GÉNÉRATION DE DONNÉES D'IMAGE D'UN OBJET

(30) Priorität: 19.03.2013 DE 102013204829
(43) Veröffentlichungstag der Anmeldung: 27.01.2016
(73) Patentinhaber: Carl Zeiss Microscopy GmbH, 07745 Jena (DE)
(72) Erfinder: PÉREZ-WILLARD, Fabian, 73433 Aalen (DE)
(74) Vertreter: Tongbhoyai, Martin
(86) Internationale Anmeldenummer: PCT/EP2014/055357
(87) Internationale Veröffentlichungsnummer: WO 2014/147045

(56) Entgegenhaltungen:
- EP-A2- 1 746 386
- US-A1- 2003 098 416
- HEYMANN J A W ET AL: "Site-specific 3D imaging of cells and tissues with a dual beam microscope", JOURNAL OF STRUCTURAL BIOLOGY, ACADEMIC PRESS, UNITED STATES, Bd. 155, Nr. 1, 4. April 2006 (2006-04-04) , Seiten 63-73, XP024905192, ISSN: 1047-8477, DOI: 10.1016/J.JSB.2006.03.006 [gefunden am 2006-07-01]
- SHEARING P R ET AL: "X-ray nano computerised tomography of SOFC electrodes using a focused ion beam sample-preparation technique", JOURNAL OF THE EUROPEAN CERAMIC SOCIETY, ELSEVIER SCIENCE PUBLISHERS, BARKING, ESSEX, GB, Bd. 30, Nr. 8, 4. März 2010 (2010-03-04), Seiten 1809-1814, XP026964519, ISSN: 0955-2219 [gefunden am 2010-03-04]
- TAKAHIRO SONOMURA ET AL: "Correlative analysis of immunoreactivity in confocal laser-scanning microscopy and scanning electron microscopy with focused ion beam milling", FRONTIERS IN NEURAL CIRCUITS, Bd. 7, 25. Februar 2013 (2013-02-25), XP055115792, DOI: 10.3389/fncir.2013.00026
- KAMINO TAKEO ET AL: "Application of a FIB-STEM system for 3D observation of a resin-embedded yeast cell", JOURNAL OF ELECTRON MICROSC, JAPANESE SOCIETY FOR ELECTRON MICROSCOPY. TOKYO, JP, vol. 53, no. 5, 1 January 2004 (2004-01-01), pages 563-566, XP009105208, ISSN: 0022-0744, DOI: 10.1093/JMICRO/DFH063
- G. Sengle ET AL: "A Correlative Method for Imaging Identical Regions of Samples by Micro-CT, Light Microscopy, and Electron Microscopy: Imaging Adipose Tissue in a Model System", Journal of Histochemistry & Cytochemistry, vol. 61, no. 4, 20 December 2012 (2012-12-20), pages 263-271, XP055147937, ISSN: 0022-1554, DOI: 10.1369/0022155412473757

## Beschreibung

Die Erfindung betrifft ein Verfahren zur Erzeugung von Bilddaten eines Objekts und ein Teilchenstrahlgerät zur Durchführung dieses Verfahrens. Das Teilchenstrahlgerät ist beispielsweise als ein Kombinationsgerät ausgebildet, das sowohl einen Elektronenstrahl als auch einen lonenstrahl zur Verfügung stellt.

Elektronenstrahlgeräte, insbesondere ein Rasterelektronenmikroskop (SEM) oder ein Transmissionselektronenmikroskop (TEM), werden zur Untersuchung von Objekten verwendet, um Kenntnisse hinsichtlich der Eigenschaften und Verhalten dieser Objekte unter bestimmten Bedingungen zu erhalten.

Bei einem SEM wird ein Elektronenstrahl (nachfolgend auch Primärelektronenstrahl genannt) mittels eines Strahlerzeugers erzeugt. Die Elektronen des Primärelektronenstrahls werden auf eine vorgebbare Energie beschleunigt und durch ein Strahlführungssystem, insbesondere eine Objektivlinse, auf ein zu analysierendes Objekt (eine zu analysierende Probe) fokussiert. Zur Beschleunigung wird bei dem SEM eine Hochspannungsquelle mit einer vorgebbaren Beschleunigungsspannung verwendet. Mittels einer Ablenkeinrichtung wird der Primärelektronenstrahl rasterförmig über eine Oberfläche des zu analysierenden Objekts geführt. Die Elektronen des Primärelektronenstrahls treten dabei in Wechselwirkung mit dem Material des zu analysierenden Objekts. Als Folge der Wechselwirkung entstehen insbesondere Wechselwirkungsteilchen und/oder Wechselwirkungsstrahlung. Beispielsweise werden Elektronen von dem zu analysierenden Objekt emittiert (sogenannte Sekundärelektronen) und Elektronen des Primärelektronenstrahls an dem zu analysierenden Objekt zurückgestreut (sogenannte Rückstreuelektronen). Die Sekundärelektronen und Rückstreuelektronen werden detektiert und zur Bilderzeugung verwendet. Man erhält somit eine Abbildung des zu analysierenden Objekts.

Eine Abbildung des zu analysierenden Objekts ist eine mögliche Form der Analyse des zu analysierenden Objekts. Es sind aber durchaus weitere Formen der Analyse bekannt. Beispielsweise wird die Wechselwirkungsstrahlung (insbesondere Röntgenstrahlung oder Kathodolumineszenzlicht) detektiert und ausgewertet, um Rückschlüsse auf die Zusammensetzung des zu analysierenden Objekts zu erhalten.

Ferner ist es aus dem Stand der Technik bekannt, Kombinationsgeräte zur Bearbeitung und/oder zur Analyse eines Objekts zu verwenden, bei denen sowohl Elektronen als auch Ionen auf ein zu bearbeitendes und/oder zu analysierendes Objekt geführt werden können. Beispielsweise ist es bekannt, ein SEM zusätzlich mit einer lonenstrahlsäule auszustatten. Mittels eines in der lonenstrahlsäule angeordneten lonenstrahlerzeugers werden Ionen erzeugt, die zum Bearbeiten eines Objekts (beispielsweise zum Abtragen einer Schicht des Objekts oder zum Aufbringen von Material auf das Objekt) oder auch zur Bildgebung verwendet werden. Das SEM dient hierbei insbesondere zur Beobachtung der Bearbeitung, aber auch zur weiteren Analyse des bearbeiteten oder nicht bearbeiteten Objekts.

Ferner ist aus dem Stand der Technik ein Teilchenstrahlgerät bekannt, das eine erste Teilchenstrahlsäule mit einer ersten Strahlachse aufweist, wobei die erste Teilchenstrahlsäule zur Erzeugung eines ersten Teilchenstrahls ausgebildet ist. Zusätzlich weist das bekannte Teilchenstrahlgerät eine zweite Teilchenstrahlsäule auf, die mit einer zweiten Strahlachse versehen ist und die zur Erzeugung eines zweiten Teilchenstrahls ausgebildet ist. Die erste Teilchenstrahlsäule und die zweite Teilchenstrahlsäule sind derart zueinander angeordnet, dass die erste Strahlachse und die zweite Strahlachse einen ersten Winkel von ungefähr 50° bis 60° einschließen. Ferner weist das bekannte Teilchenstrahlgerät einen Objektträger auf, der um eine Rotationsachse drehbar ist. Die Rotationsachse verläuft beispielsweise durch den Mittelpunkt des Objektträgers. Ferner schließt die Rotationsachse mit der ersten Strahlachse einen zweiten Winkel und mit der zweiten Strahlachse einen dritten Winkel ein. An dem Objektträger kann ein Objekt an einem Objekthalter angeordnet werden, wobei das Objekt eine zu bearbeitende und/oder zu analysierende Objektfläche aufweist. Der Objekthalter ist entlang der Rotationsachse oberhalb des Objektträgers angeordnet.

Bei einem bekannten Verfahren werden ebenfalls sowohl ein erster Teilchenstrahl (lonenstrahl) als auch ein zweiter Teilchenstrahl (Elektronenstrahl) eingesetzt. Der erste Teilchenstrahl wird im Wesentlichen senkrecht zu einer Markierungsoberfläche des zu untersuchenden Objekts geführt. Auf der Markierungsoberfläche sind zwei longitudinale Markierungen aufgebracht, die V-förmig zu einer Längsachse des Objekts angeordnet sind und sich in einem Punkt auf der Markierungsoberfläche des Objekts schneiden. Ferner ist es vorgesehen, dass mittels des ersten Teilchenstrahls eine Schicht des Objekts durch Rastern des ersten Teilchenstrahls senkrecht zu der Längsachse des Objekts entfernt wird. Hierdurch wird eine Oberfläche freigelegt, welche senkrecht zu der Längsachse des Objekts (also parallel zum ersten Teilchenstrahl) orientiert ist. In einem weiteren Schritt trifft der zweite Teilchenstrahl auf die freigelegte Oberfläche auf. Die hierbei entstehenden Wechselwirkungsteilchen werden detektiert. Die bei der Detektion entstehenden Detektionssignale werden zur Bildgebung verwendet, und die auf diese Weise erhaltenen Bilddaten werden gespeichert. Die vorgenannten Verfahrensschritte werden wiederholt, um weitere Oberflächen des zu untersuchenden Objekts freizulegen und Bilddaten der weiteren Oberflächen zu erhalten. In einem nachfolgenden Verfahrensschritt werden die gespeicherten Bilddaten der verschiedenen freigelegten Oberflächen zu einem dreidimensionalen Bilddatensatz des Objekts zusammengesetzt.

Hinsichtlich des Standes der Technik wird beispielhaft auf die DE 10 2008 041 815 A1, die DE 10 2007 026 847 A1, die EP 1 443 541 B1 sowie die US 7,312,448 B2 verwiesen.

Mit den bekannten Teilchenstrahlgeräten des Standes der Technik werden beispielsweise Serienuntersuchungen an einem Objekt durchgeführt. Hierunter versteht man insbesondere, dass die Objektoberfläche eines Objekts zunächst in einem ersten Schritt mit dem ersten Teilchenstrahl bearbeitet wird. Beispielsweise wird Material der Objektfläche abgetragen oder Material auf die Objektfläche aufgetragen. Um die Objektfläche zu bearbeiten, wird der Objektträger in eine erste Position relativ zur ersten Teilchenstrahlsäule gebracht. Anschließend wird die Objektfläche mit dem ersten Teilchenstrahl bearbeitet. In einem zweiten Schritt wird die bearbeitete Objektfläche mittels des zweiten Teilchenstrahls analysiert. Hierzu wird der Objektträger in eine zweite Position relativ zur zweiten Teilchenstrahlsäule gebracht. Anschließend wird die bearbeitete Objektfläche analysiert. Beispielsweise wird die bearbeitete Objektfläche mittels des zweiten Teilchenstrahls abgebildet. Bei der Serienuntersuchung ist es nun vorgesehen, einen mehrfachen Wechsel zwischen dem ersten Schritt und dem zweiten Schritt durchzuführen. Dabei können die erste Position und die zweite Position beispielsweise identisch sein. In diesem Fall trifft der zweite Teilchenstrahl beispielsweise auf der bearbeiteten Objektfläche schräg auf.

Darüber hinaus ist aus dem Stand der Technik ein Röntgenmikroskop bekannt, bei dem ein Objekt mittels Röntgenstrahlen analysiert wird. Die Wechselwirkung des Objekts mit den Röntgenstrahlen wird gemessen und ausgewertet. Auf diese Weise erhält man eine Darstellung des Objekts. Mittels des Röntgenmikroskops lässt sich auch eine dreidimensionale Darstellung des Objekts erstellen. Hinsichtlich des Standes der Technik wird beispielhaft auf die US 7,561,662 B2 sowie auf die Veröffentlichung "Metrology of 3D IC with X-ray Microscopy and Nano-scale X-ray CT" von Wang et al. in IEEE 2009 verwiesen.

Ferner ist aus dem Stand der Technik ein konfokales Laser-Scanning-Mikroskop bekannt. Mit dem bekannten konfokalen Laser-Scanning-Mikroskop wird ein kleiner Bereich eines zu analysierenden Objekts mittels eines Laserstrahls untersucht, wobei der Laserstrahl rasterförmig über das Objekt geführt wird. Durch Auswertung der Wechselwirkung des Laserstrahls mit dem Objekt (insbesondere durch Messung von am Objekt reflektiertem oder transmittiertem Licht oder von Fluoreszenz) wird eine Darstellung des Objekts berechnet und angezeigt. Hinsichtlich des Standes der Technik wird beispielhaft auf die Veröffentlichung "Orthogonal-plane fluorescence optical sectioning: three-dimensional imaging of macroscopic biological specimens" von Voie et al. verwiesen (Journal of Microscopy, Band 170, Pte 3, Juni 1993). Ferner ist aus der WO 20101136319 A1 eine Kombination eines Teilchenstrahlgeräts mit einem sogenannten SPI-Mikroskop beschrieben (Selective-Plane-Illumination-Mikroskop), welche zur korrelativen optischen Mikroskopie und Teilchenstrahl-Mikroskopie verwendet wird. Darüber hinaus ist aus der WO 2012/080363 A1 ein Verfahren für eine automatisierte Abbildung von vordefinierten Regionen in Schnittserien bekannt, in denen künstliche Strukturen in Form von Bohrungen in ein noch ungeschnittenes Objekt eingebracht werden, um eine spätere Rekonstruktion des Bildes des Objekts in 3D zu erleichtern.

Es ist für einige zu analysierende Objekte wünschenswert, dass diese zu analysierenden Objekte mit möglichst vielen der existierenden Analyseverfahren und Analysegeräten untersucht werden, um möglichst viele Informationen über die zu analysierenden Objekte zu sammeln.

Hinsichtlich des Standes der Technik wird auf die EP 1 746 386 A2, die US 2003/0098416 A1, die Veröffentlichung von Heymann et al mit dem Titel "Site-specific 3D imaging of cells and tissues with a dual beam microscope" in Journal of Structural Biology, Band 155 (2006) Seiten 63 - 73, die Veröffentlichung von Shearing et al mit dem Titel "X-ray nano computerised tomography of SFOC electrodes using a focused ion beam sample-preparation technique" in Journal of the European Ceramic Society, Band 30 (2010) Seiten 1809 - 1814, die Veröffentlichung von Sonomura et al mit dem Titel "Correlative analysis of immunoreactivity in confocal laser-scanning microscopy and scanning electron microscopy with focused ion beam milling" in Frontiers in Neural Circuits, Band 7 Februar 2013, Seiten 1 bis 7 sowie die Veröffentlichung von Kamino et al mit dem Titel "Application of a FIB-STEM system for 3D observation of a resin-embedded yeast cell" in Journal of Electron Microscopy, Band 53 (2004), Seiten 563 - 566 verwiesen.

G. Sengle ET AL: "A Correlative Method for Imaging Identical Regions of Samples by Micro-CT, Light Microscopy, and Electron Microscopy: Imaging Adipose Tissue in a Model System", Journal of Histochemistry & Cytochemistry, Bd. 61, Nr. 4, 20. Dezember 2012 (2012-12-20), Seiten 263-271, XP055147937,ISSN: 0022-1554, DOI: 10.1369/0022155412473757 offenbart die Festlegung eines Untersuchungsbereichs mittels Mikro-CT, Freilegen des Untersuchungsbereichs und Erfassen von Bilddaten den Untersuchungsbereichs mittels eines Elektronenmikroskops.

Der Erfindung liegt daher die Aufgabe zugrunde, ein Verfahren anzugeben, mit dem ein Objekt auf eine einfache Weise mit mehreren Analyseverfahren und Analysegeräten untersucht werden kann.

Erfindungsgemäß wird diese Aufgabe durch ein Verfahren mit den Merkmalen des Anspruchs 1 gelöst. Weitere Merkmale der Erfindung ergeben sich aus der nachfolgenden Beschreibung, aus den beigefügten Ansprüchen und/oder aus den beigefügten Figuren.

Das erfindungsgemäße Verfahren dient der Erzeugung von Bilddaten eines zu analysierenden Objekts mittels eines Teilchenstrahls. Bei dem erfindungsgemäßen Verfahren ist es vorgesehen, dass mindestens eine Markierung in dem Objekt oder in einem Stützmaterial, in dem das Objekt eingebettet ist, angeordnet wird. Dabei wird vorstehend und auch nachstehend unter einem Anordnen der Markierung beispielsweise ein Aufbringen der Markierung auf einer Oberfläche des Stützmaterials und/oder des Objekts verstanden. Zusätzlich oder alternativ hierzu kann die Markierung auch innerhalb des Stützmaterials und/oder des Objekts angeordnet werden. Hierauf wird weiter unten näher eingegangen. Die Markierung dient bei einer Analyse des Objekts der Orientierung, so dass Bereiche des Objekts einfach und sicher mit unterschiedlichen Analyseverfahren oder Analysegeräten ermittelt und wiedergefunden werden können. Beispielsweise umfasst die Markierung eine Vielzahl von zueinander beabstandeten Einzelmarkierungen, deren Abstand fest vorgegeben ist. Bei einem weiteren Verfahrensschritt erfolgt ein Bestimmen mindestens eines Untersuchungsbereichs des Objekts unter Verwendung der Markierung. Der Untersuchungsbereich ist beispielsweise ein bestimmtes Teilvolumen des Objekts, welches mit einem ersten Analyseverfahren bestimmt wird und mit einem zweiten Analyseverfahren beispielsweise näher analysiert wird. Hierauf wird weiter unten noch näher eingegangen.

Wenn der Untersuchungsbereich bestimmt ist, erfolgt ein Freilegen des Untersuchungsbereichs durch Entfernen von Material des Objekts und/oder des Stützmaterials. Das Freilegen des Untersuchungsbereichs kann auf unterschiedliche Arten erfolgen. So ist es bei Ausführungsformen des erfindungsgemäßen Verfahrens vorgesehen, den Untersuchungsbereich durch Sägen, Schleifen, Fräsen oder mittels eines Lasers freizulegen. Bei einer weiteren Ausführungsform ist es vorgesehen, zur Freilegung des Untersuchungsbereichs einen Teilchenstrahl zu verwenden. Hierauf wird weiter unten näher eingegangen. Zusätzlich zu dem Freilegen des Untersuchungsbereichs ist es bei wiederum weiteren Ausführungsformen vorgesehen, dass der Untersuchungsbereich zusätzlich präpariert wird. Beispielsweise wird der Untersuchungsbereich poliert und/oder geschliffen.

Bei der Erfindung ist es nun vorgesehen, dass ein erster Teilchenstrahl über den freigelegten Untersuchungsbereich geführt wird. Hierbei kommt es zu einer Wechselwirkung des Teilchenstrahls mit dem freigelegten Untersuchungsbereich. Es entstehen insbesondere Wechselwirkungsteilchen (beispielsweise Sekundärteilchen oder rückgestreute Teilchen) und/oder Wechselwirkungsstrahlung. Diese werden mit mindestens einem Detektor detektiert und in Detektorsignale umgewandelt. Die Detektorsignale entsprechen Bilddaten des freigelegten Untersuchungsbereichs, die erfasst werden.

Bei dem erfindungsgemäßen Verfahren ist/sind das Objekt und/oder das Stützmaterial transparent für Strahlen ausgebildet, mit denen der Untersuchungsbereich bestimmt wird. Ferner ist/sind das Objekt und/oder das Stützmaterial für Lichtstrahlen im sichtbaren Bereich transparent. Zusätzlich oder alternativ hierzu ist vorgesehen, dass das Objekt und/oder das Stützmaterial für Röntgenstrahlen transparent ist/sind. Mit anderen Worten ausgedrückt ist/sind das Objekt und/oder das Stützmaterial derart ausgebildet, dass Röntgenstrahlen durch das Objekt und/oder das Stützmaterial transmittieren können. Dabei ist es beispielsweise möglich, dass das Objekt und/oder das Stützmaterial transparent für Röntgenstrahlen ist/sind, aber für Lichtstrahlen im sichtbaren Bereich nicht transparent ist/sind. Insbesondere reicht es aus, wenn das Stützmaterial für den Wellenlängenbereich derjenigen Strahlung, die bei der späteren Auswahl oder Festlegung des Untersuchungsbereichs eingesetzt wird, transparent oder in einem solchen Grad für die eingesetzte Strahlung durchlässig ist, dass mit einem hinter dem in das Stützmaterial eingebetteten Objekt angeordneten Strahlungsdetektor eine ausreichende Strahlungsintensität detektiert werden kann.

Bei einer Ausführungsform des erfindungsgemäßen Verfahrens ist es alternativ oder zusätzlich vorgesehen, dass das Verfahren einen Schritt des Einbringens des Objekts in das Stützmaterial umfasst, wobei das Einbringen des Objekts in das Stützmaterial derart erfolgt, dass das Objekt von dem - beispielsweise transparenten - Stützmaterial umfasst ist. Beispielsweise ist das Objekt von dem Stützmaterial teilweise oder vollständig umfasst. Mit anderen Worten ausgedrückt ist das Objekt von dem Stützmaterial beispielsweise teilweise oder vollständig ummantelt. Durch das teilweise oder vollständige Einbringen des zu analysierenden Objekts in das Stützmaterial (also wenn das zu analysierende Objekt teilweise oder vollständig von dem Stützmaterial ummantelt ist) ist eine einfache Möglichkeit geschaffen, das zu analysierende Objekt mit mehreren Analyseverfahren und/oder Analysegeräten zu untersuchen. Zum einen ist das zu analysierende Objekt leicht handhabbar und ist einfach zwischen zwei unterschiedlichen Analysegeräten zu transportieren, wobei das Objekt zudem aufgrund der Ummantelung geschützt ist. Zum anderen ist aufgrund der angeordneten Markierung ein Untersuchungsbereich leicht bestimmbar und immer wieder auffindbar.

Bei einer weiteren Ausführungsform des erfindungsgemäßen Verfahrens ist es vorgesehen, dass das Bestimmen des Untersuchungsbereichs des Objekts mit Hilfe eines tomographischen Verfahrens erfolgt, das einen dreidimensionalen Datensatz des Objekts liefert.

Bei einer weiteren Ausführungsform des erfindungsgemäßen Verfahrens ist es vorgesehen, dass der dreidimensionale Datensatz eine erste Ortsauflösung R1 hat, wobei die Bilddaten des freigelegten Untersuchungsbereichs eine zweite Ortsauflösung R2 haben, und wobei für das Verhältnis der ersten Ortsauflösung zur zweiten Ortsauflösung R1/R2 gilt: 5 < R1/R2 < 10.000.

Bei einer Ausführungsform des erfindungsgemäßen Verfahrens ist es vorgesehen, dass das tomographische Verfahren die folgenden Schritte umfasst:
- Bestrahlen des Objekts mehrfach nacheinander mit Röntgenstrahlung unter unterschiedlichen Einfallswinkeln der Röntgenstrahlung auf das Objekt und Detektieren einer Serie von Bildern mithilfe der jeweils durch das Objekt transmittierten Röntgenstrahlung,
- Ermitteln des 3D-Datensatzes (also des dreidimensionalen Datensatzes) des Objekts aus der Serie von Bildern durch Anwenden einer Tomographie-Auswertesoftware auf die Serie von Bildern,
- wobei das Bestimmen des Untersuchungsbereichs in dem 3D-Datensatz des Objekts erfolgt,
- und wobei die Markierungen derart in dem Objekt oder derart in dem Stützmaterial angeordnet sind, dass sie in dem 3D-Datensatz des Objekts erkennbar sind.

Bei einer wiederum weiteren Ausführungsform des erfindungsgemäßen Verfahrens ist es vorgesehen, dass die Markierungen derart angeordnet werden, dass mindestens ein Teil der Markierungen auch nach dem Freilegen des Untersuchungsbereichs vorhanden sind. Insbesondere ist es vorgesehen, dass die Markierungen derart angebracht sind, dass ein Teil der nach dem Freilegen des Untersuchungsbereichs vorhandenen Markierungen in den Bilddaten erkennbar sind, die durch Detektion von Wechselwirkungsteilchen oder Wechselwirkungsstrahlung, welche aufgrund einer Wechselwirkung des ersten Teilchenstrahls mit dem freigelegten Untersuchungsbereich entstehen/entsteht, gewonnenen werden.

Bei einer Ausführungsform des erfindungsgemäßen Verfahrens ist es zusätzlich oder alternativ vorgesehen, dass das Einbringen des Objekts in das - beispielsweise transparente - Stützmaterial das Einbringen des Objekts in einen transparenten Kunststoff oder in ein Glas umfasst. Beispielsweise wird als transparenter Kunststoff PMMA, Polycarbonat und/oder ein transparentes Epoxidharz verwendet. Als Glas wird beispielsweise ein handelsübliches Industrieglas oder ein Kristallglas verwendet. Alternativ oder zusätzlich hierzu ist es vorgesehen, dass das Einbringen des Objekts in das - beispielsweise transparente - Stützmaterial das Einbringen des Objekts in ein Glas oder in einen transparenten Kunststoff umfasst, welches bzw. welcher eine symmetrische Form aufweist. Die Einbringung des Objekts in ein Glas oder in einen transparenten Kunststoff mit einer symmetrischen Form weist den Vorteil auf, dass die Lage des Objekts in dem Glas bzw. in dem transparenten Kunststoff aufgrund der symmetrischen Form gut bestimmbar ist. Beispielsweise können symmetrisch angeordnete Kanten und Flächen des Glases oder des transparenten Kunststoffs zur Bestimmung der Lage des Objekts in dem Glas oder in dem transparenten Kunststoff verwendet werden. Bei einem weiteren Ausführungsbeispiel des erfindungsgemäßen Verfahrens ist es alternativ oder zusätzlich vorgesehen, dass das Objekt in ein Glas oder in einen transparenten Kunststoff eingebracht wird, das würfelförmig bzw. rechteckförmig ausgebildet ist. Beispielsweise weist das Glas oder der transparente Kunststoff die Form eines Quaders auf. Es wird aber explizit darauf hingewiesen, dass die Erfindung nicht auf die Form eines Quaders eingeschränkt ist. Vielmehr kann das Glas oder der transparente Kunststoff jede geeignete räumliche Form aufweisen. Beispielsweise ist das Glas oder der transparente Kunststoff würfelförmig oder zylinderförmig ausgebildet.

Bei einer Ausführungsform des erfindungsgemäßen Verfahrens ist es zusätzlich oder alternativ vorgesehen, dass das Anordnen der Markierung an dem Objekt oder an dem - beispielsweise transparenten - Stützmaterial mittels eines Lasers erfolgt. Zusätzlich oder alternativ hierzu ist es vorgesehen, dass das Anordnen der Markierung an dem Objekt oder dem - beispielsweise transparenten - Stützmaterial mittels eines zweiten Teilchenstrahls erfolgt, beispielsweise mit einem lonenstrahl. Wiederum zusätzlich oder alternativ hierzu ist es vorgesehen, dass das Anordnen der Markierung an dem Objekt auf einer Oberfläche des Objekts oder an dem - beispielsweise transparenten - Stützmaterial auf einer Oberfläche des Stützmaterials erfolgt. Bei einer wiederum weiteren vorteilhaften Ausführungsform des erfindungsgemäßen Verfahrens ist es zusätzlich oder alternativ vorgesehen, dass das Anordnen der Markierung durch eine Innengravur des Objekts oder des - beispielsweise transparenten - Stützmaterials erfolgt, beispielsweise mittels eines Lasers. Dies erfolgt beispielsweise wie nachfolgend erläutert. Um einen entsprechenden Punkt innerhalb des Glases oder des transparenten Kunststoffs zu markieren, wird ein Laserstrahl in das Innere des Glases bzw. des transparenten Kunststoffs fokussiert. Im Fokuspunkt ist die Energiedichte des Laserstrahls derart ausreichend hoch, dass im Fokuspunkt sichtbare Punkte oder Strukturen aufgrund der Wechselwirkung des Laserstrahls mit dem Glas oder dem transparenten Kunststoff entstehen. Dabei ist es vorgesehen, dass die sichtbaren Punkte oder Strukturen nicht als durchgehende Öffnung von einer ersten Außenseite des Glases oder des transparenten Kunststoffs zu einer zweiten Außenseite des Glases oder des transparenten Kunststoffs ausgebildet sind.

Bei einer wiederum weiteren Ausführungsform des erfindungsgemäßen Verfahrens ist es zusätzlich oder alternativ vorgesehen, dass das Bestimmen des Untersuchungsbereichs des Objekts unter Verwendung eines Röntgenmikroskops erfolgt. Zusätzlich oder alternativ hierzu ist es vorgesehen, dass das Bestimmen des Untersuchungsbereichs des Objekts unter Verwendung eines konfokalen Laser-Scanning-Mikroskops erfolgt. Diese Ausführungsformen weisen den Vorteil auf, dass zum einen der Untersuchungsbereich des Objekts bestimmt wird. Zum anderen ist es möglich, mit diesen Geräten zusätzliche Informationen über das zu analysierende Objekt zu erhalten, die zur Analyse des Objekts herangezogen werden.

Bei einer Ausführungsform des erfindungsgemäßen Verfahrens ist es zusätzlich oder alternativ vorgesehen, dass das Freilegen des Untersuchungsbereichs unter Verwendung eines Laserstrahls einer Laserbearbeitungseinrichtung und/oder eines zweiten Teilchenstrahls erfolgt. Beispielsweise ist der zweite Teilchenstrahl ein lonenstrahl. Dieses wird weiter unten noch näher erläutert.

Bei einer weiteren Ausführungsform des erfindungsgemäßen Verfahrens ist es zusätzlich oder alternativ vorgesehen, dass die erfassten Bilddaten nach der Freilegung des Untersuchungsbereichs in einer Speichereinheit gespeichert werden. Die gespeicherten Bilddaten können so jederzeit abgerufen, verarbeitet und/oder analysiert werden.

Bei einer wiederum weiteren Ausführungsform des erfindungsgemäßen Verfahrens ist es ebenfalls zusätzlich oder alternativ vorgesehen, dass die erfassten Bilddaten des freigelegten Untersuchungsbereichs als erste Bilddaten erfasst werden. Ferner werden alternativ oder zusätzlich die folgenden Schritte durchgeführt. Zunächst werden die ersten Bilddaten in einer Speichereinheit gespeichert. Ferner wird eine Schicht des Untersuchungsbereichs (und gegebenenfalls des übrigen Objekts und des - beispielsweise transparenten - Stützmaterials) mittels eines zweiten Teilchenstrahls und/oder eines Laserstrahls entfernt. Beispielsweise ist der zweite Teilchenstrahl als lonenstrahl ausgebildet. Nach dem Entfernen der Schicht des Untersuchungsbereichs wird der erste Teilchenstrahl über die nun freigelegte Oberfläche des Untersuchungsbereichs bewegt. Somit wird der erste Teilchenstrahl nach dem Entfernen der Schicht auf die freigelegte Fläche des Untersuchungsbereichs fokussiert. Es erfolgt ein Erfassen von zweiten Bilddaten mit dem Detektor durch Detektion von Wechselwirkungsteilchen und/oder Wechselwirkungsstrahlung aufgrund einer Wechselwirkung des ersten Teilchenstrahls mit dem Objekt. Es entstehen insbesondere Sekundärteilchen und rückgestreute Teilchen. Diese werden mit dem Detektor detektiert. Die zweiten Bilddaten werden in der Speichereinheit gespeichert. Durch wiederholtes Ausführen dieser Ausführungsform ist es möglich, eine dreidimensionale Darstellung des Untersuchungsbereichs zu erstellen. Hierzu erfolgt ein Berechnen von dreidimensionalen Bilddaten mittels der ersten Bilddaten und der zweiten Bilddaten. Anhand der dreidimensionalen Darstellung des Untersuchungsbereichs ist es nun besonders gut möglich, Aussagen über die Eigenschaften des Untersuchungsbereichs zu machen.

Bei einer Ausführungsform des erfindungsgemäßen Verfahrens ist es zusätzlich oder alternativ vorgesehen, dass ein Elektronenstrahl als der erste Teilchenstrahl verwendet wird. Wie bereits oben erwähnt, ist es zusätzlich oder alternativ hierzu vorgesehen, dass ein lonenstrahl als der zweite Teilchenstrahl verwendet wird. Beispielsweise wird diese Ausführungsform des erfindungsgemäßen Verfahrens in einem Kombinationsgerät durchgeführt, das sowohl eine Elektronenstrahlsäule als auch eine lonenstrahlsäule aufweist.

Bei einer weiteren Ausführungsform des erfindungsgemäßen Verfahrens ist vorgesehen, dass als Untersuchungsbereich ein Riss eines Materials oder ein Defekt eines Halbleiters bestimmt wird. Hierauf wird weiter unten näher eingegangen.

Bei einer noch weiteren Ausführungsform des erfindungsgemäßen Verfahrens ist vorgesehen, dass eine TEM-Lamelle, welche den Untersuchungsbereich aufweist, unter Verwendung des zweiten Teilchenstrahls erzeugt wird. Die TEM-Lamelle wird dann mittels des ersten Teilchenstrahls bestrahlt. Durch die TEM-Lamelle transmittierende Teilchen des ersten Teilchenstrahls werden mit einem weiteren Detekor detektiert.

Bei einer wiederum weiteren Ausführungsform des erfindungsgemäßen Verfahrens ist vorgesehen, dass das Objekt zunächst mit einem konfokalen Laser-Scanning-Mikroskop untersucht wird, dass das Objekt nach der Untersuchung eingefärbt und/oder fixiert wird, und dass der Untersuchungsbereich nach der Einfärbung und/oder Fixierung unter Verwendung eines Röntgenmikroskops bestimmt wird. Im Anschluss daran wird der Untersuchungsbereich freigelegt und die Bilddaten des freigelegten Untersuchungsbereichs werden erfasst.

Ein Computerprogrammprodukt weist einen ausführbaren Programmcode auf, der in einen Prozessor ladbar ist (oder geladen ist) und bei Ausführung ein Verfahren ausführt, das mindestens einen der oben genannten oder unten genannten Schritte oder eine Kombination von mindestens zwei der oben genannten oder unten genannten Schritte aufweist.

Ein Teilchenstrahlgerät ist zur Durchführung eines Verfahrens, das mindestens eines der oben genannten oder unten genannten Schritte aufweist, vorgesehen. Das Teilchenstrahlgerät weist mindestens einen ersten Strahlerzeuger zur Erzeugung eines ersten Teilchenstrahls, mindestens eine erste Objektivlinse zur Fokussierung des ersten Teilchenstrahls auf das Objekt und mindestens eine Steuereinheit mit einem Prozessor auf, in dem ein Computerprogrammprodukt geladen ist, das weiter oben beschrieben wurde.

Bei einer weiteren Ausführungsform des Teilchenstrahlgeräts ist es zusätzlich oder alternativ vorgesehen, dass das Teilchenstrahlgerät mindestens einen zweiten Strahlerzeuger zur Erzeugung eines zweiten Teilchenstrahls und mindestens eine zweite Objektivlinse zur Fokussierung des zweiten Teilchenstrahls auf das Objekt aufweist. Beispielsweise ist der erste Teilchenstrahl als Elektronenstrahl ausgebildet. Ferner ist der zweite Teilchenstrahl beispielsweise als lonenstrahl ausgebildet. Alternativ oder zusätzlich hierzu ist es vorgesehen, dass das Teilchenstrahlgerät eine Lasereinrichtung zur Erzeugung eines Laserstrahls aufweist.

Nachfolgend wird die Erfindung anhand von Ausführungsbeispielen mittels Figuren näher erläutert. Dabei zeigen
- Figuren 1A bis 1D: schematische Darstellungen von Abläufen von Ausführungsformen des Verfahrens;
- Figur 2: Darstellungen eines transparenten Stützmaterials und des Objekts bei unterschiedlichen Verfahrensschritten;
- Figur 3A: eine erste Ausführungsform eines Teilchenstrahlgeräts zur Durchführung zahlreicher Verfahrensschritte;
- Figur 3B: eine zweite Ausführungsform eines Teilchenstrahlgeräts zur Durchführung zahlreicher Verfahrensschritte;
- Figur 4: eine schematische Darstellung eines Ablaufs einer weiteren Ausführungsform des Verfahrens; sowie
- Figur 5: eine schematische Darstellung einer Ausführungsform eines Röntgentomographiesystems.

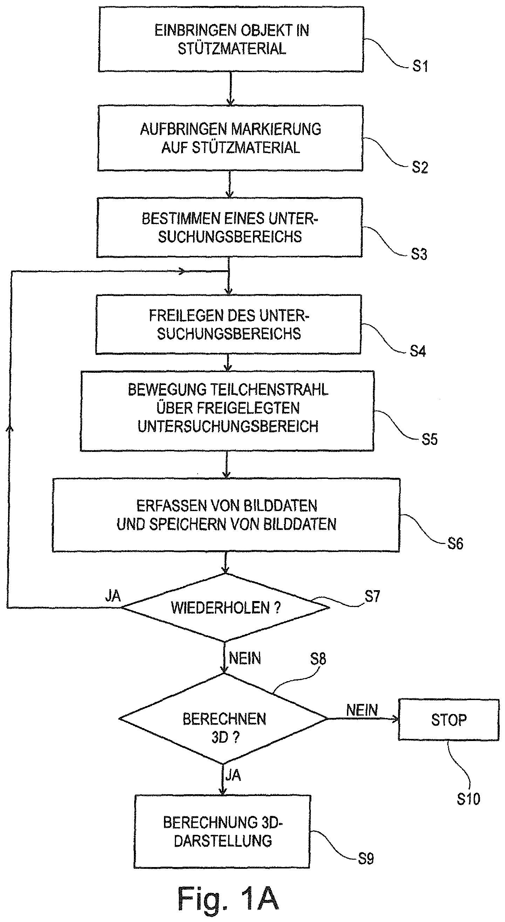

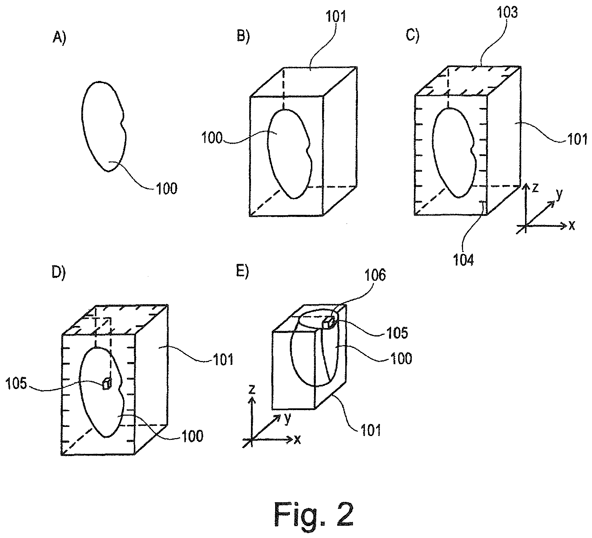

**Figur 1A** zeigt eine schematische Darstellung einer ersten Ausführungsform des erfindungsgemäßen Verfahrens. **Figur 2** zeigt Darstellungen zur Verdeutlichung von einzelnen Verfahrensschritten.

In einem Verfahrenschritt S1 wird ein Objekt 100 in ein transparentes Stützmaterial 101 eingebracht (vgl. **Figuren 2A und 2B****).** Dabei wird das Objekt 100 in das transparente Stützmaterial 101 derart eingebracht, dass das Objekt 100 teilweise oder vollständig von dem transparenten Stützmaterial 101 umfasst ist. Bei der in der **Figur 2B** dargstellten Ausführungsform ist das Objekt 100 vollständig von dem transparenten Stützmaterial 101 umfasst. Mit anderen Worten ausgedrückt ist das Objekt 100 von dem transparenten Stützmaterial 101 vollständig ummantelt. Bei dem hier dargestellten Ausführungsbeispiel wird als transparentes Stützmaterial 101 ein transparenter Kunststoff (beispielsweise PMMA, Polycarbonat, Epoxidharz oder Polyesterharz) oder ein Glas verwendet (beispielsweise ein Industrieglas oder ein Kristallglas). Das transparente Stützmaterial 101 weist bei dem hier dargestellten Ausführungsbeispiel eine symmetrische Form in Form eines Quaders auf. Dies weist den Vorteil auf, dass die relative Lage des Objekts 100 in dem transparenten Stützmaterial 101 gut bestimmbar ist. Beispielsweise können die Kanten und Flächen des transparenten Stützmaterials 101 zur Bestimmung der Lage des Objekts 100 in dem transparenten Stützmaterial 101 verwendet werden. Die Erfindung ist aber auf die vorbeschriebene Form eines Quaders nicht eingeschränkt. Vielmehr kann für die Erfindung jegliche geeignete Form des transparenten Stützmaterials 101 gewählt werden, beispielsweise die Form eines Zylinders, eines Kegels, eines Kegelstumpfs, einer Pyramide oder weiterer räumlicher Strukturen.

In einem weiteren Verfahrensschritt S2 wird eine Markierung 103 auf das transparente Stützmaterial 101 aufgebracht (vgl. **Figur 2C****).** Die Markierung 103 dient bei einer Analyse des Objekts 100 der Orientierung, so dass interessierende Bereiche des Objekts 100 einfach und sicher mit unterschiedlichen Analyseverfahren oder Analysegeräten ermittelt und wiedergefunden werden können. Beispielsweise umfasst die Markierung 103 eine Vielzahl von zueinander beabstandeten Einzelmarkierungen 104, deren Abstand zueinander fest vorgegeben ist (vgl. **Figur 2C**). Die Einzelmarkierungen 104 verlaufen entlang der Kanten des transparenten Stützmaterials 101. Das Aufbringen der Einzelmarkierungen 104 erfolgt beispielsweise mittels einer Innengravur. Um einen entsprechenden Punkt innerhalb des Glases oder des transparenten Kunststoffs zu markieren, wird ein Laserstrahl in das Innere des Glases bzw. des transparenten Kunststoffs fokussiert. Im Fokuspunkt ist die Energiedichte des Laserstrahls derart ausreichend hoch, dass im Fokuspunkt sichtbare Punkte oder Strukturen aufgrund der Wechselwirkung des Laserstrahls mit dem Glas oder mit dem transparenten Kunststoff entstehen. Der Vorteil der Innengravur ist, dass die Einzelmarkierungen 104 in der Regel beim Abtragen von Material des Objekts 100 nicht mit abgetragen werden. Ferner können die Einzelmarkierungen 104 relativ nahe an dem Objekt 100 angeordnet werden, so dass eine gute Identifizierung von Bereichen des Objekts 100 mittels der Einzelmarkierungen 104 möglich ist.

Zusätzlich oder alternativ zu der vorbeschriebenen Innengravur ist es bei dem Ausführungsbeispiel gemäß der **Figur 2C** vorgesehen, dass die Markierung 103 auf der Oberfläche des transparenten Stützmaterials 101 aufgebracht wird.

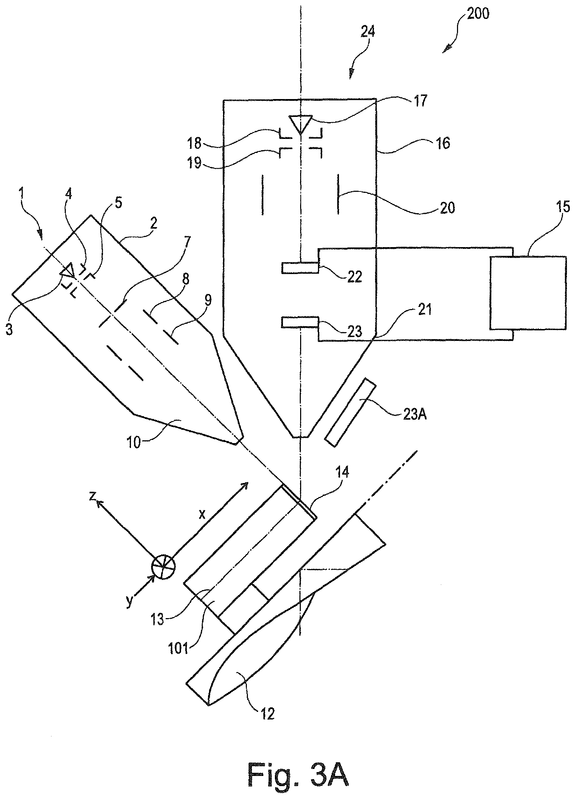

Bei einer Ausführungsform des erfindungsgemäßen Verfahrens ist es vorgesehen, dass das Aufbringen der Markierung 103 auf dem transparenten Stützmaterial 101 mittels eines Lasers erfolgt. Zusätzlich oder alternativ hierzu ist es vorgesehen, dass das Aufbringen der Markierung 103 auf dem transparenten Stützmaterial 101 mittels eines lonenstrahls erfolgt. Dies kann beispielsweise in einem Teilchenstrahlgerät 200 erfolgen, welches nachfolgend anhand der **Figur 3A** näher erläutert wird.

**Figur 3A** zeigt eine schematische Darstellung des Teilchenstrahlgeräts 200, welches ein lonenstrahlgerät 1 und ein Elektronenstrahlgerät 24 aufweist.

Das lonenstrahlgerät 1 weist eine lonenstrahlsäule 2 auf, in welcher zahlreiche Einheiten des lonenstrahlgeräts 1 angeordnet sind. Insbesondere ist in der lonenstrahlsäule 2 eine lonenquelle 3 angeordnet. Mit der lonenquelle 3 werden Ionen erzeugt, die in der lonenstrahlsäule 2 einen Teilchenstrahl in Form eines lonenstrahls bilden. Beispielsweise werden mit der lonenquelle 3 Ionen aus einem einzelnen Element (beispielsweise Gallium (Ga)) zur Verfügung gestellt. Die Ionen können als ionisierte Atome oder aber auch als ionisierte Moleküle ausgebildet sein.

Die Ionen werden mittels einer lonenstrahlelektrode 4 auf ein vorgebbares Potential beschleunigt und anschließend durch eine erste Kondensorlinse 5 geführt. Anschließend wird der aus den Ionen gebildete lonenstrahl durch eine Blende 7 geführt und gelangt dann zu einer ersten Elektrodeneinrichtung 8 und zu einer zweiten Elektrodeneinrichtung 9, welche als Rasterelektroden ausgebildet sind. Mittels der ersten Elektrodeneinrichtung 8 und der zweiten Elektrodeneinrichtung 9 wird der aus den Ionen bestehende lonenstrahl über das transparente Stützmaterial 101 gerastert. Zuvor wird der lonenstrahl mittels einer ersten Objektivlinse 10 auf das transparente Stützmaterial 101 fokussiert. Es wird darauf hingewiesen, dass das transparente Stützmaterial 101 für den lonenstrahl nicht transparent ist, sondern ausschließlich für auf das transparente Stützmaterial 101 einfallende Lichtstrahlen, die eine Wellenlänge im sichtbaren Bereich aufweisen, oder für auf das transparente Stützmaterial 101 einfallende Röntgenstrahlung.

Das transparente Stützmaterial 101 wird zuvor an einem Probenträger 12 angeordnet, welcher gewährleistet, dass das transparente Stützmaterial 101 entlang einer x-Achse beweglich ist. Die x-Achse verläuft bei diesem Ausführungsbeispiel entlang einer Längsachse 13 des transparenten Stützmaterials 101, wie sie in der **Figur 3A** dargestellt ist. Bei weiteren Ausführungsbeispielen kann die x-Achse auch anders angeordnet sein. Die Längsachse 13 des transparenten Stützmaterials 101 liegt vorzugsweise in einer ersten Ebene, welche senkrecht oder im Wesentlichen senkrecht zu einer zweiten Ebene angeordnet ist, in welcher der lonenstrahl dem transparenten Stützmaterial 101 zugeführt wird.

Das Elektronenstrahlgerät 24 ist als Rasterelektronenmikroskop ausgebildet. Es weist eine Elektronensäule 16 auf, in der die Einheiten des Elektronenstrahlgeräts 24 angeordnet sind. So ist eine Elektronenquelle 17 vorgesehen, die Elektronen erzeugt, welche mittels einer ersten Elektrode 18 extrahiert werden. Mittels einer zweiten Elektrode 19 werden die Elektronen auf ein vorgebbares Potential beschleunigt. Die Elektronen werden anschließend durch eine zweite Kondensorlinse 20 geführt, wodurch ein zweiter Teilchenstrahl in Form eines Elektronenstrahls geformt wird. Dieser wird mittels einer zweiten Objektivlinse 21 auf eine Oberfläche 14 des transparenten Stützmaterials 101 fokussiert. An der zweiten Objektivlinse 21 angeordnete Rasterelektroden (nicht dargestellt) stellen sicher, dass der Elektronenstrahl über das transparente Stützmaterial 101 gerastert werden kann.

Beim Auftreffen des Elektronenstrahls auf der Oberfläche 14 des transparenten Stützmaterials 101 entstehen Wechselwirkungsteilchen, insbesondere Sekundärelektronen und Rückstreuelektronen. Diese werden mittels eines ersten Detektors 22 und mittels eines zweiten Detektors 23 detektiert und zur Bildgebung verwendet. Es ist somit möglich, ein Bild der Oberfläche 14 des transparenten Stützmaterials 101 zu erzeugen. Der erste Detektor 22 und der zweite Detektor 23 sind mit einer Auswerte- und Speichereinheit 15 verbunden, in der Bilddaten der Oberfläche 14 analysiert und gespeichert werden. Ferner ist die Auswerte- und Speichereinheit 15 mit einem Prozessor versehen, in dem ein Programmcode eines Computerprogrammprodukts geladen ist, welches die Verfahren gemäß der Erfindung ausführt. Bei weiteren Ausführungsbeispielen kann ferner ein dritter Detektor 23A vorgesehen sein (vgl. **Figur 3A****),** welcher weitere Wechselwirkungsreaktionen, beispielsweise Röntgenquanten, erfasst, welche ebenfalls zur Erzeugung von Bilddaten verwendet werden können.

Mittels des in **Figur 3A** dargestellten Teilchenstrahlgeräts 200 wird nun die Markierung 103 auf das transparente Stützmaterial 101 aufgebracht. Hierzu wird zu den Flächen des transparenten Stützmaterials 101, an denen die Markierung 103 angeordnet werden soll, der lonenstrahl geführt und mittels Materialbearbeitung (beispielsweise einer Materialabtragung oder einer Materialaufbringung) die Markierung 103 an dem transparenten Stützmaterial 101 angeordnet. Mittels einer Abbildung durch den Elektronenstrahl kann das Anordnen der Markierung 103 auf dem transparenten Stützmaterial 101 beobachtet werden.

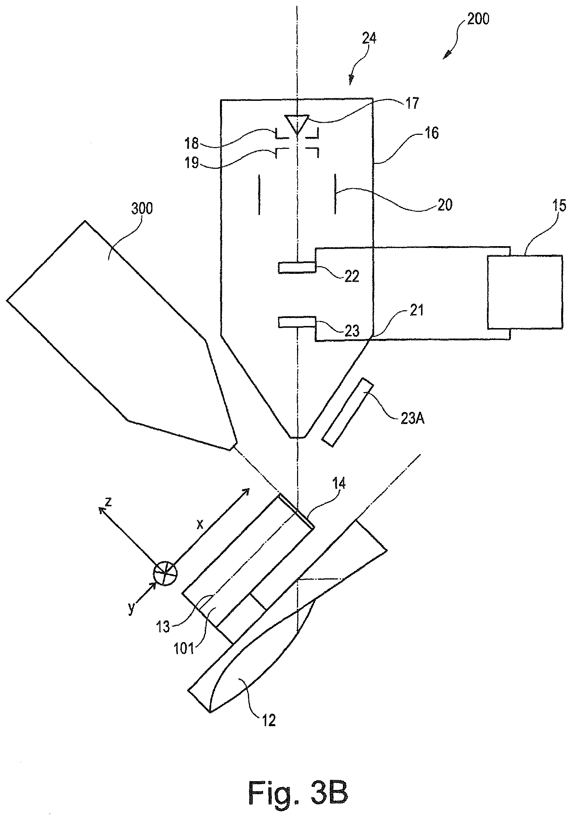

Eine weitere Ausführungsform des erfindungsgemäßen Teilchenstrahlgeräts 200 ist in der **Figur 3B** dargestellt. **Figur 3B** beruht auf der **Figur 3A****.** Gleiche Bauteile sind mit gleichen Bezugszeichen versehen. Im Unterschied zum Ausführungsbeispiel der **Figur 3A** weist das Ausführungsbeispiel der **Figur 3B** kein lonenstrahlgerät 1, sondern eine Lasereinheit 300 mit einem Laser auf. Mittels der Lasereinheit 300 wird bei diesem Ausführungsbeispiel die Markierung 103 auf das transparente Stützmaterial 101 aufgebracht oder durch Innengravur im transparenten Stützmaterial 1 eingebracht. Hierzu wird auf die Erklärungen weiter oben verwiesen.

In einem weiteren Verfahrenschritt S3 wird nun ein Bereich des Objekts 100 bestimmt, der näher untersucht werden soll **(****Figur 1A****).** Dieser Bereich wird als Untersuchungsbereich 105 bezeichnet. Der Untersuchungsbereich 105 ist beispielsweise ein bestimmtes Teilvolumen des Objekts 101 (vgl. **Figur 2D****).** Das Bestimmen des Untersuchungsbereichs 105 kann auf unterschiedliche Art erfolgen. Bei einer Ausführungsform des Verfahrens ist es vorgesehen, das transparente Stützmaterial 101 in ein Röntgenmikroskop einzubringen und das Objekt 100 mittels des Röntgenmikroskops zu untersuchen. Bei dieser Untersuchung wird dann auch der Untersuchungsbereich 105 bestimmt. Bei einer weiteren Ausführungsform des Verfahrens ist es vorgesehen, das transparente Stützmaterial 101 in ein konfokales Laser-Scanning-Mikroskop einzubringen und das Objekt 100 mittels des konfokalen Laser-Scanning-Mikroskops zu untersuchen. Bei dieser Untersuchung wird dann der Untersuchungsbereich 105 bestimmt. Die beiden Ausführungsformen weisen den Vorteil auf, dass zum einen der Untersuchungsbereich 105 des Objekts 101 bestimmt wird. Zum anderen ist es möglich, mit den beiden Mikroskopen zusätzliche Informationen über das Objekt 100 zu erhalten, die zur Analyse des Objekts 100 herangezogen werden. Bei allen Ausführungsbeispielen zur Bestimmung des Untersuchungsbereichs 105 kann es beispielsweise vorgesehen sein, dass bei der Bestimmung ermittelte Daten, insbesondere Bilddaten, in einer Speichereinheit gespeichert werden. Die gespeicherten Daten werden beispielsweise zur Korrelation mit weiteren Daten verwendet, die erst später erfasst werden.

In dem Verfahrensschritt S3 kann ein dreidimensionaler Datensatz (3D-Datensatz) mit einer gegenüber der Auflösung des Teilchenstrahlgeräts 200 reduzierten Auflösung aufgenommen werden. Dieses kann mit einem Laser-Scanning-Mikroskop dadurch erfolgen, dass das in dem Stützmaterial 101 eingebettete Objekt 100 mit dem fokussierten Laserstrahl des Laser-Scanning-Mikroskops in allen drei zu einander senkrechten Raumrichtungen abgerastert wird und durch Detektion von reflektiertem Licht oder Fluoreszenzlicht an jedem Rasterpunkt im dreidimensionalen Raum Bildinformation aufgenommen und gespeichert wird sowie nachfolgend zu einem 3D-Datensatz des Objekts 100 zusammengesetzt wird. Alternativ kann der 3D-Datensatz im Verfahrensschritt S3 auch mit einem Röntgenmikroskop oder einem Röntgen-Tomographie-System, beispielsweise einem Röntgen-Mikro-Tomographie-System oder einem Röntgen-Nano-Tomographie-System aufgenommen werden, indem das in dem Stützmaterial 101 eingebettete Objekt 100 mittels Röntgenstrahlung durchstrahlt und die transmittierte Röntgenstrahlung detektiert wird. Es werden dann wie bei der Computertomographie mehrere Bilder der transmittierten Röntgenstrahlung bei unterschiedlichen Transmissionsrichtungen durch das in dem Stützmaterial 101 eingebettete Objekt 100 aufgenommen, beispielsweise indem das in dem Stützmaterial 101 eingebettete Objekt 100 zwischen den einzelnen Bildaufnahmen relativ zur Röntgenquelle und zum Röntgendetektor gedreht wird. Durch eine tomographische Auswertung der aufgenommenen Bilder kann dann ein 3D-Datensatz des in dem Stützmaterial 101 eingebetteten Objekts 100 gewonnen werden.

In dem Verfahrensschritt S3 erfolgt dann die Bestimmung des Bereichs oder der Bereiche, der bzw. die näher untersucht werden soll(en), mit der Auflösung und der Genauigkeit des im Verfahrensschritt S3 eingesetzten Verfahrens für die Erzeugung des 3D-Datensatzes. Wird der 3D-Datensatz mit einem Laser-Scanning-Mikroskop gewonnen, beträgt die Auflösung bzw. Festlegung des näher zu untersuchenden Bereichs typischer Weise 200 nm - 500 nm. Wird der 3D-Datensatz mit einem Röntgenmikroskop mit einer Röntgenabbildung zwischen dem Objekt 100 und dem Detektor gewonnen, beträgt die Auflösung bzw. die Festlegung des näher zu untersuchenden Bereichs typischer Weise 10 nm - 5.000 nm. Wird der 3D-Datensatz mit einem Röntgenmikroskop ohne eine Röntgenabbildung zwischen dem Objekt 100 und dem Detektor gewonnen, also mit einem Röntgen-Mikro-Tomographie-System oder einem Röntgen-Nano-Tomographie-System, beträgt die Auflösung bzw. Festlegung des näher zu untersuchenden Bereichs typischer Weise 500 nm bis 5.000 nm. In allen diesen genannten Fällen erfolgt die Festlegung des näher zu untersuchenden Bereichs bzw. der näher zu untersuchenden Bereiche mit einer Genauigkeit, die um einen Faktor 5 bis 5.000 oder um einen Faktor 5 bis 10.000 oder um einen Faktor 2 bis 50.000 geringer ist als die Auflösung von 0,1 nm bis 5 nm, mit der nachfolgend das Objekt 101 mit dem Teilchenstrahlgerät 200 untersucht wird.

In einem weiteren Verfahrensschritt S4 (vgl. **Figur 1A****)** wird nun der Untersuchungsbereich 105 freigelegt (vgl. **Figur 2E****).** Das Freilegen des Untersuchungsbereichs 105 kann auf unterschiedliche Arten erfolgen. So ist es bei Ausführungsformen des erfindungsgemäßen Verfahrens vorgesehen, den Untersuchungsbereich 105 durch Sägen, Schleifen, Fräsen oder mittels einer Lasereinheit freizulegen. Bei einer weiteren Ausführungsform ist es zusätzlich oder alternativ vorgesehen, das transparente Stützmaterial 101 zusammen mit dem Objekt 100 in das Teilchenstrahlgerät 200 gemäß **Figur 3A** einzubringen und zur Freilegung des Untersuchungsbereichs 105 den lonenstrahl zu verwenden. Mittels des lonenstrahls ist es möglich, das Material des transparenten Stützmaterials 101 und das Material des Objekts 100 schichtweise abzutragen, bis eine Oberfläche 106 des Untersuchungsbereichs 105 freigelegt ist und weiter analysiert werden kann. Zusätzlich oder alternativ hierzu ist es vorgesehen, das transparente Stützmaterial 101 zusammen mit dem Objekt 100 in das Teilchenstrahlgerät 200 gemäß **Figur 3B** einzubringen und zur Freilegung des Untersuchungsbereichs 105 den Laserstrahl zu verwenden.

In all diesen genannten Fällen erfolgt das Freilegen des näher zu untersuchenden Bereichs bzw. der näher zu untersuchenden Bereiche anhand des bzw. der in dem Verfahrensschritt S3 gewonnenen 3D-Datensatzes bzw. 3D-Datensätze und der auf dem transparenten Stützmaterial 101 aufgebrachten oder in das transparente Stützmaterial 101 eingebrachten Markierung 103. Dafür ist es erforderlich, dass die auf das Stützmaterial 101 aufgebrachte oder in das Stützmaterial 101 eingebrachte Markierung 103 sowohl bei dem im Verfahrensschritt S3 eingesetzten Verfahren als auch bei dem beim Freilegen eingesetzten Beobachtungsverfahren in den jeweils aufgenommenen Bildern und in dem im Verfahrensschritt S3 gewonnenen 3D-Datensatz erkennbar sind. Das Freilegen des näher zu untersuchenden Bereichs bzw. der näher zu untersuchenden Bereiche erfolgt damit mit einer Genauigkeit, welche der Auflösung des im Verfahrensschritt S3 eingesetzten Verfahrens entspricht.

Zur weiteren Analyse ist es bei der hier erläuterten Ausführungsform des erfindungsgemäßen Verfahrens vorgesehen, dass der Untersuchungsbereich 105 in dem Teilchenstrahlgerät 200 gemäß **Figur 3A** **oder** **3B** analysiert wird. Hierzu wird in einem Verfahrensschritt S5 der Elektronenstrahl über die freigelegte Oberfläche 106 des Untersuchungsbereichs 105 gerastert. Beim Auftreffen des Elektronenstrahls auf der Oberfläche 106 des Untersuchungsbereichs 105 entstehen Wechselwirkungsteilchen, insbesondere Sekundärelektronen und Rückstreuelektronen. Diese werden mittels des ersten Detektors 22 und mittels des zweiten Detektors 23 detektiert und zur Bildgebung verwendet. Es ist somit möglich, ein Bild der Oberfläche 106 des Untersuchungsbereichs 105 zu erzeugen. Der erste Detektor 22 und der zweite Detektor 23 sind mit der Auswerte- und Speichereinheit 15 verbunden, in der Bilddaten der Oberfläche 106 des Untersuchungsbereichs 105 in einem Verfahrensschritt S6 erfasst, analysiert und gespeichert werden.

Alternativ oder zusätzlich hierzu kann auch der lonenstrahl zur Analyse des Untersuchungsbereichs 105 im Teilchenstrahlgerät 200 gemäß der **Figur 3A** verwendet werden. Dazu wird der Probenträger 12, auf dem das transparente Stützmaterial 101 zusammen mit dem Objekt 100 angeordnet ist, so orientiert, dass die Oberfläche 106 des Untersuchungsbereichs 105 und damit die Oberfläche 14 gemäß der **Figur 3A** annähernd senkrecht oder das transparente Stützmaterial 101 schräg zum lonenstrahl der lonenstrahlsäule 2 ausgerichtet ist. Durch das Auftreffen des lonenstrahls entstehen Wechselwirkungsteilchen, beispielsweise Sekundärelektronen oder Sekundärionen. Die Sekundärelektronen werden beispielsweise durch die bereits oben beschriebenen Detektoren 22 und 23 detektiert und werden dann zur Bildgebung und zur Speicherung von Bilddaten verwendet. Die Sekundärionen werden beispielsweise mit dem dritten Detektor 23A oder in einem weiteren, nicht dargestellten lonendetektor detektiert und werden anschließend analysiert.

Falls das transparente Stützmaterial 101 und/oder das Objekt 100 aus einem nichtleitenden oder schlecht leitendem Material gebildet ist, dann ist es bei einer weiteren Ausführungsform der Erfindung vorgesehen, dass nach oder während der Verfahrensschritte S5 und S6 Maßnahmen ergriffen werden, um Aufladungseffekte zu beseitigen oder zu minimieren. Diese Verfahren sind beispielsweise aus der DE 10 2008 040 426 A1 und der EP 1 501 115 B1 bekannt.

In einem weiteren Verfahrensschritt S7 wird nun geprüft, ob weitere Bilddaten des Untersuchungsbereichs 105 erzeugt werden sollen (vgl. **Figur 1A****).** ist dies der Fall, dann werden die Verfahrensschritte S4 bis S7 wiederholt. Bei dieser Wiederholung wird im Verfahrensschritt S4 eine Schicht des Untersuchungsbereichs 105 (und gegebenenfalls des übrigen Objekts 100 sowie des transparenten Stützmaterials 101) mittels des lonenstrahls im Teilchenstrahlgerät 200 der **Figur 3A** oder mittels des Laserstrahls im Teilchenstrahlgerät 200 der **Figur 3B** entfernt. Nach dem Entfernen der Schicht ist wiederum eine weitere Oberfläche 106 des Untersuchungsbereichs 105 freigelegt, auf welche der Elektronenstrahl fokussiert wird und über welche der Elektronenstrahl bewegt wird. Es erfolgt ein Erfassen von Bilddaten der weiteren Oberfläche 106 und Speichern dieser Bilddaten, wie oben bereits geschildert.

Wenn keine Bilddaten mehr erfasst werden sollen, dann wird im Verfahrensschritt S8 geprüft, ob eine dreidimensionale Darstellung des Untersuchungsbereichs 105 berechnet werden soll (vgl. **Figur 1A****).** Wenn dies gewünscht ist, dann wird im Verfahrensschritt S9 unter Verwendung der gespeicherten Bilddaten eine dreidimensionale Darstellung des Untersuchungsbereichs 105 berechnet und in einer Anzeigeeinheit dargestellt (vgl. **Figur 1A****).** Wenn keine Berechnung einer dreidimensionalen Darstellung gewünscht ist, wird das Verfahren im Verfahrensschritt S10 angehalten (vgl. **Figur 1A****).**

Bei dem Aufbringen oder Einbringen der Markierungen 103 in dem Verfahrensschritt S2 sollten die Markierungen 103 derart gleichmäßig über das Objekt 100 oder das Stützmaterial 101 verteilt sein, dass mit großer Wahrscheinlichkeit ausreichend Markierungen 103 in dem später zu bestimmenden Untersuchungsbereich 105 vorhanden sind. Es ist daher sinnvoll, nach dem Festlegen des Untersuchungsbereichs 105 und vor dem Freilegen des Untersuchungsbereichs 105 zu überprüfen, ob der Untersuchungsbereich 105 eine ausreichende Anzahl an Markierungen 103 aufweist. Sollte dieses nicht der Fall sein, kann es sinnvoll sein, vor dem Freilegen des Untersuchungsbereichs 105 noch einmal zusätzliche Markierungen 103 im Untersuchungsbereich 105 oder in dem den Untersuchungsbereich 105 unmittelbar umgebenden Stützmaterial 101 derart aufzubringen oder einzubringen, dass diese Markierungen 103 auch nach dem Freilegen des Untersuchungsbereichs 105 noch vorhanden und erkennbar sind.

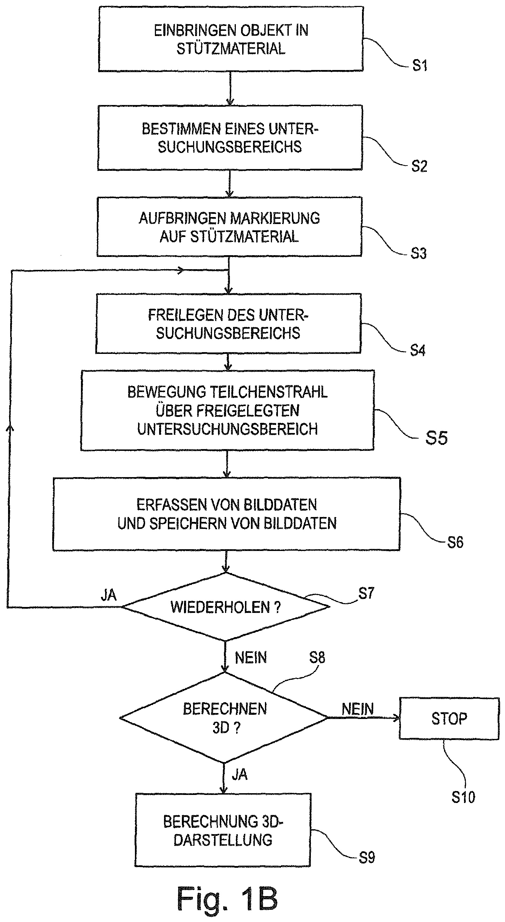

Einen Ablauf eines weiteren Ausführungsbeispiels des erfindungsgemäßen Verfahrens ist in **Figur 1B** dargestellt. Das Ausführungsbeispiel der **Figur 1B** beruht auf der **Figur 1A****.** Allerdings weist das Ausführungsbeispiel der **Figur 1B** den Unterscheid auf, dass das Bestimmen des Untersuchungsbereichs 105 im Verfahrensschritt S2 erfolgt und das Aufbringen/Anordnen der Markierung 103 in das transparente Stützmaterial 101 im Verfahrensschritt S3. Auch hier kann es bei der Bestimmung des Untersuchungsbereichs 105 beispielsweise vorgesehen sein, dass bei der Bestimmung ermittelte Daten, insbesondere Bilddaten, in einer Speichereinheit gespeichert werden. Die gespeicherten Daten werden beispielsweise zur Korrelation mit weiteren Daten verwendet, die erst später erfasst werden. Dieses Ausführungsbeispiel hat den Vorteil, dass leichter sichergestellt werden kann, dass nach dem Freilegen des Untersuchungsbereichs 105 ausreichend Markierungen 103 im Untersuchungsbereich 105 oder in dessen unmittelbarer Nähe vorhanden sind.

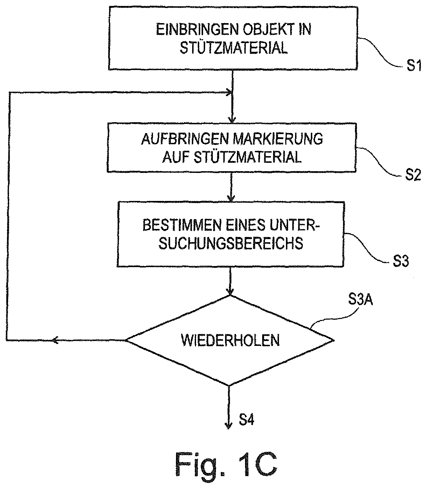

Einen Ablauf eines wiederum weiteren Ausführungsbeispiels des erfindungsgemäßen Verfahrens ist in **Figur 1C** dargestellt. Das Ausführungsbeispiel der **Figur 1C** beruht auf der **Figur 1A****.** Allerdings weist das Ausführungsbeispiel der **Figur 1C** den Unterschied auf, dass nach dem Verfahrensschritt S3 ein Verfahrenschritt S3A folgt, bei dem abgefragt wird, ob das Aufbringen der Markierung 103 (Verfahrensschritt S2) und das Bestimmen des Untersuchungsbereichs 105 (Verfahrensschritt S3) nochmals erfolgen soll. Dieses Ausführungsbeispiel wird beispielsweise gewählt, um genauere und feinere Einzelmarkierungen 104 aufzubringen. Wenn eine Wiederholung nicht gewünscht ist, folgt der Verfahrensschritt S4 der **Figur 1A** sowie die weiteren, dem Verfahrensschritt S4 folgenden Verfahrensschritte.

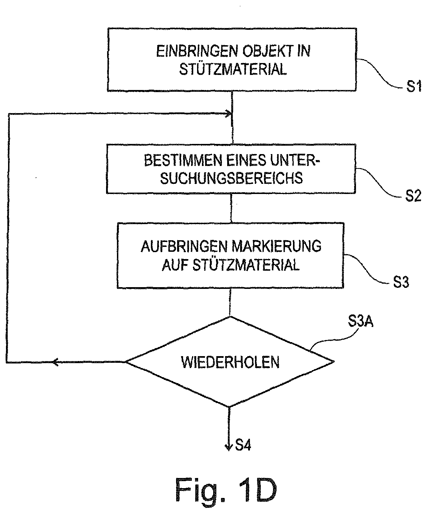

Einen Ablauf eines weiteren Ausführungsbeispiels des erfindungsgemäßen Verfahrens ist in **Figur 1D** dargestellt. Das Ausführungsbeispiel der **Figur 1D** beruht auf der **Figur 1B****.** Allerdings weist das Ausführungsbeispiel der **Figur 1D** den Unterschied auf, dass nach dem Verfahrensschritt S3 ein Verfahrenschritt S3A folgt, bei dem abgefragt wird, ob das Bestimmen des Untersuchungsbereichs 105 (Verfahrensschritt S2) und das Aufbringen der Markierung 103 (Verfahrensschritt S3) nochmals erfolgen soll. Dieses Ausführungsbeispiel wird beispielsweise gewählt, um genauere und feinere Einzelmarkierungen 104 aufzubringen. Wenn eine Wiederholung nicht gewünscht ist, folgt der Verfahrensschritt S4 der **Figur 1B** sowie die weiteren, dem Verfahrensschritt S4 folgenden Verfahrensschritte.

Die erläuterten Ausführungsbeispiele des erfindungsgemäßen Verfahrens weisen alle Vorteile und Eigenschaften auf, die bereits weiter oben erläutert wurden. Hierauf wird an dieser Stelle explizit verwiesen.

Allen zuvor beschriebenen Verfahren ist gemeinsam, dass nach dem Einbringen des Objekts 100 in das transparente Stützmaterial 101 und nachfolgendem Aufbringen oder Einbringen der Markierung 103 auf oder in das transparente Stützmaterial 101 zunächst mit einem 3D-Tomographieverfahren ein 3D-Datensatz des in das transparente Stützmaterial 101 eingebetteten Objekts 100 mit einer gegenüber der Auflösung des Teilchenstrahlgeräts 200 reduzierten, aber dennoch hohen Auflösung im Bereich zwischen 10 nm und 5000 nm gewonnen wird, so dass das nachfolgende Freilegen des näher zu untersuchenden Objektbereichs bzw. der näher zu untersuchenden Objektbereiche schnell mit einem relativ groben Verfahren oder in relativ groben Schritten unter Ausnutzung der auf dem transparenten Stützmaterial 101 aufgebrachten oder in das transparente Stützmaterial 101 eingebrachten Markierung 103 erfolgen kann. Nachfolgend wird dann von dem näher zu untersuchenden Bereich oder von den näher zu untersuchenden Bereichen jeweils ein 3D-Datensatz mit hoher Auflösung im Bereich von 0,1 nm bis 5 nm mithilfe des Teilchenstrahlgeräts 200 gewonnen, wobei für die Erzeugung des 3D-Datensatzes sukzessive Schichten von dem näher zu untersuchenden Bereich 105 entfernt und dann jeweils ein Bild mit dem Teilchenstrahlgerät 200 aufgenommen wird. Das 3D-Tomographieverfahren erlaubt dabei eine für das Objekt 100 und das transparente Stützmaterial 101 zerstörungsfreie Gewinnung des 3D-Datensatzes.

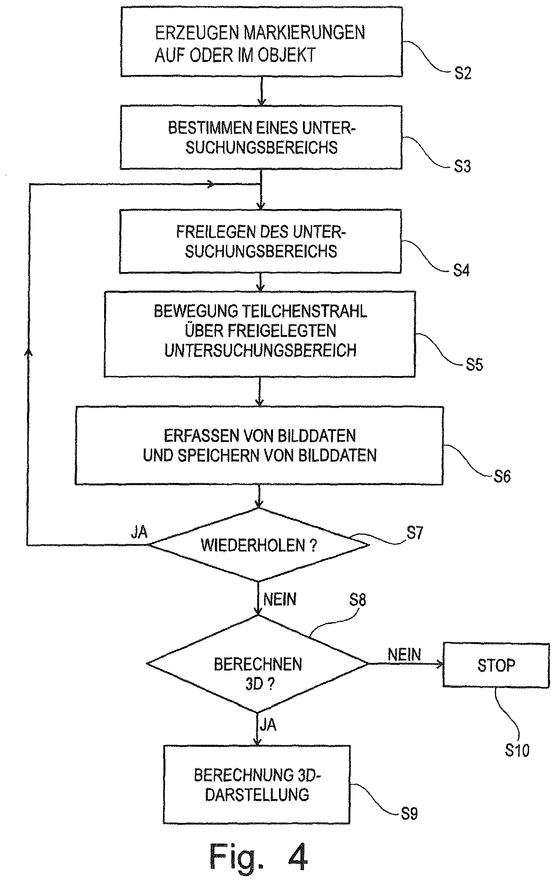

Einen Ablauf eines weiteren Ausführungsbeispiels des erfindungsgemäßen Verfahrens ist in **Figur 4** dargestellt. Das Ausführungsbeispiel der **Figur 4** beruht auf der **Figur 1A****.** Im Unterschied zum Ausführungsbeispiel der **Figur 1A** ist bei dem Ausführungsbeispiel der **Figur 4** vorgesehen, dass der Verfahrensschritt des Einbringens des Objekts 100 in das Stützmaterial 101 entfällt und die Markierungen 103 im Verfahrensschritt S2 unmittelbar im oder auf dem Objekt 100 erzeugt werden.

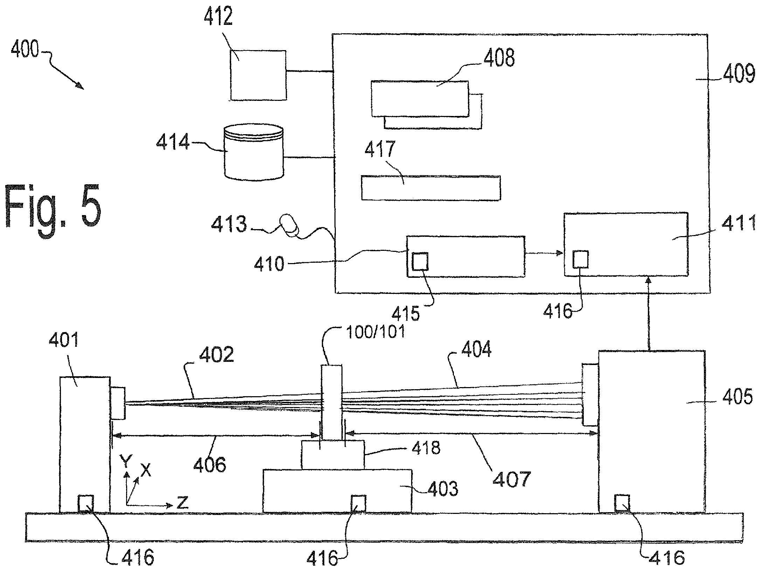

**Figur 5** zeigt eine schematische Darstellung eines Röntgentomographiesystems 400, welches für die Ausführungsformen des erfindungsgemäßen Verfahrens verwendet werden kann. Das Röntgentomographiesystem 400 weist ein Erzeugersystem 401 für Röntgenstrahlung - also eine Röntgenquelle - auf, welches Röntgenstrahlen 402 erzeugt. Ferner weist das Röntgentomographiesystem 400 einen Rotationstisch 403 mit einem Objekthalter 418 zum Halten des Objekts 100 und/oder des Stützmaterials 101 auf. Bei einigen Ausführungsbeispielen weist das Erzeugersystem 401 integrierte Filter zur Filterung der Röntgenstrahlen 402 auf.

Wenn das Objekt 100 und/oder das Stützmaterial 101 mit den Röntgenstrahlen 402 bestrahlt werden, transmittieren Röntgenphotonen durch das Objekt 100 und/oder das Stützmaterial 101. Diese transmittierenden Röntgenphotonen bilden transmittierende Röntgenstrahlen 404, welche durch ein Detektorsystem 405 detektiert werden. Bei einigen Ausführungsbeispielen wird eine Objektivlinse verwendet, um ein Bild auf dem Detektorsystem 405 zu erzeugen.

Ein vergrößertes Projektionsbild des Objekts 100 und/oder des Stützmaterials 101 wird an dem Detektorsystem 405 mit einer Vergrößerung erzeugt, die durch das Verhältnis eines ersten Abstands 406 zu einem zweiten Abstand 407 gegeben ist. Dabei entspricht der Abstand 406 dem Abstand zwischen dem Erzeugersystem 401 und dem Objekt 100 und/oder dem Stützmaterial 101. Der zweite Abstand 407 entspricht dem Abstand zwischen dem Objekt 100 und/oder dem Stützmaterial 101 sowie dem Detektorsystem 405. Um eine besonders gute hohe Auflösung des Röntgentomographiesystems 400 zu erzielen, ist das Detektorsystem 405 hochauflösend ausgebildet. Zusätzlich oder alternativ hierzu wird/werden das Objekt 100 und/oder das Stützmaterial 101 nahe an dem Erzeugersystem 401 angeordnet, wobei die Auflösung des Röntgenbildes durch die Auflösung des Detektorsystems 405, die Größe des fokussierten Spots des Röntgenstrahls, die Position des Objekts 100 und/oder des Stützmaterials 101 und die geoemtrische Vergrößerung begrenzt ist.

Um die geometrische Vergrößerung einzustellen, kann ein Anwender Interface-Anwendungen 408 eines Computersystems 409 verwenden, um den ersten Abstand 406 und den zweiten Abstand 407 einzustellen. Der Anwender stellt den ersten Abstand 406 und den zweiten Abstand 407 derart ein, bis die gewünschte Vergrößerung erzielt ist. Der Rotationstisch 403 wird gedreht, um eine Computertomographie-Abtastung unter Verwendung eines Controllers 410 durchzuführen. Das Detektorsystem 405 kann derart ausgebildet sein, dass das Bildfeld an dem Objekt 100 und/oder dem Stützmaterial 101 durch Änderung der Pixelgröße in dem Detektorsystem 405 einstellbar ist.

Das Detektorsystem 405 erzeugt ein Bild der Röntgenphotonen in Pixeln von den transmittierten Röntgenstrahlen 404, welche mit einem Szintillator in dem Detektorsystem 405 wechselwirken und Signale erzeugen, welche weiter verarbeitet werden. Das Bild an dem Detektorsystem 405 wird auch Projektion, Röntgenstrahlprojektion oder Röntgenstrahlprojektionsbild genannt.

Das Computersystem 409 weist die bereits oben genannten Interface-Anwendungen 408 und den Controller 410 auf. Ferner weist das Computersystem 409 einen Bildprozessor 411 auf. Eine Anzeigeeinheit 412 ist mit dem Computersystem 409 verbunden und zeigt Informationen des Röntgentomographiesystems 400 an, beispielsweise unter Verwendung der Interface-Anwendungen 408 des Computersystems 409. Eine Eingabeeinheit 413, beispielsweise eine Computermaus oder ein Touchscreen ermöglicht einen Dialog zwischen dem Anwender, dem Computersystem 409 und der Anzeigeeinheit 412.

Das Computersystem 409 lädt und speichert Informationen in einem Datenspeicher 414, welcher mit dem Computersystem 409 verbunden ist. Der Controller 410 weist ein erstes Controller-Interface 415 auf, welches dem Anwender ermöglicht, das Röntgentomographiesystem 400 zu steuern, beispielsweise durch eine Softwaresteuerung mittels des Computersystems 409.

Der Controller 410 steuert Bauteile des Röntgentomographiesystems 400, welche mit zweiten Controller-Interfaces 416 versehen sind. Diese Bauteile umfassen beispielsweise den Bildprozessor 411, das Detektorsystem 405, den Rotationstisch 403 und das Erzeugersystem 401 für Röntgenstrahlung.

Unter Verwendung der Inferface-Anwendungen 408 kann der Anwender Scan-Parameter 417 für die Computertomographie definieren und/oder aussuchen. Die Scan-Parameter 417 umfassen beispielsweise die Einstellung für die Röntgenstrahlen-Spannung, die mit dem Röntgenenergiespektrum des Scans zusammenhängt, und die Expositionszeit des Erzeugersystems 401 für die Röntgenstrahlung. Der Anwender wählt beispielsweise auch Einstellungen hinsichtlich des Bildfeldes der Röntgenstrahlen 402, welcher auf das Objekt 100 und/oder das Stützmaterial 101 einfallen, hinsichtlich der Anzahl von zu erzeugenden Röntgenprojektionsbildern des Objekts 100 und/oder des Stützmaterials 101 und hinsichtlich der Rotationswinkel, um welche der Rotationstisch 403 zur Drehung des Objekts 100 und/oder des Stützmaterials 101 bei einem Röntgencomputertomographie-Scan in dem Röntgenstrahl 402 gedreht werden soll.

Das Computersystem 409 verarbeitet unter Verwendung des Bildprozessors 411 die Datensätze, die auf Signalen des Detektorsystems 405 basieren, wobei jeweils ein Datensatz einem bestimmten Rotationswinkel zugeordnet ist. Der Bildprozessor 411 erzeugt für jeden Rotationswinkel des Rotationstisches 403 und somit des Objekts 100 und/oder des Stützmaterials 101 ein unterschiedliches Projektionsbild und setzt die erzeugten Projektionsbilder unter Verwendung eines Computertomograhpie-Rekonstruktionsalgorithmus zu einer dreidimensionalen tomographischen Volumeninformation des Objekts 100 und/oder des Stützmaterials 101 zusammen.

Wie oben bereits erwähnt, weist das Detektorsystem 405 beispielsweise einen Szintillator auf. Insbesondere ist es vorgesehen, dass das Detektorsystem 405 beispielsweise aus für Röntgenstrahlung empfindlichen Szintillatoren mit nachfolgenden Lichtdetektoren bestehen kann. Die transmittierenden Röntgenstrahlen 404 erzeugt dann in den Szintillatoren Licht, das nachfolgend von den Lichtdetektoren ortsaufgelöst detektiert wird. Bei speziellen Ausführungsformen kann zwischen einem Szintillator und dem ortsauflösenden Lichtdetektor ein optisches Vergrößerungssystem angeordnet sein; bei dieser Ausführungsform erfolgt dann eine lichtoptische Vergrößerung des auf dem Szintillator mittels Röntgenstrahlung erzeugten Bilds.

Bei einer alternativen Ausführungsform des Röntgentomographiesystems 400 kann zwischen dem Erzeugersystem 401 für Röntgenstrahlen - also die Röntgenquelle - und dem Objekt 100 und/oder dem Stützmaterial 101 ein Röntgenkondensor, insbesondere ein Spiegelkondensor, angeordnet sein, durch den die Röntgenquelle 401 auf oder in das Objekt 100 und/oder das Stützmaterial 101 abgebildet wird. Zwischen dem Objekt 100 und/oder dem Stützmaterial 101 einerseits sowie dem Detektorsystem 405 andererseits kann ein Röntgenobjektiv, insbesondere in Form einer Fresnel-Zonenplatte, angeordnet sein, durch das dann das Objekt 100 und/oder das Stützmaterial 101 vergrößert auf das Detektorsystem 405, beispielsweise auf einen Szintillator des Detektorsystems 405, abgebildet wird. Solche mit einem Röntgenkondensor und einem Röntgenobjektiv ausgestattete Systeme liefern eine höhere Ortsauflösung als auf reiner Projektion basierende Röntgen-Tomographiesysteme.

Die Erfindung betrifft auch ein weiteres Verfahren zur Erzeugung von Bilddaten eines Objekts mittels eines Teilchenstrahls, wobei das weitere Verfahren die folgenden Schritte aufweist:
- Einbringen des Objekts in ein transparentes Stützmaterial derart, dass das Objekt von dem transparenten Stützmaterial umfasst ist;
- Anordnen mindestens einer Markierung an dem transparenten Stützmaterial;
- Bestimmen mindestens eines Untersuchungsbereichs des Objekts;
- Freilegen des Untersuchungsbereichs durch Entfernen von Material des Objekts und/oder des transparenten Stützmaterials;
- Führen eines ersten Teilchenstrahls über den freigelegten Untersuchungsbereich; und
- Erfassen von Bilddaten des freigelegten Untersuchungsbereichs mit mindestens einem Detektor durch Detektion von Wechselwirkungsteilchen und/oder Wechselwirkungsstrahlung aufgrund einer Wechselwirkung des ersten Teilchenstrahls mit dem freigelegten Untersuchungsbereich.

Bei einer Ausführungsform des weiteren Verfahrens ist es zusätzlich oder alternativ vorgesehen, dass das Einbringen des Objekts in das transparente Stützmaterial derart erfolgt, dass das Objekt von dem transparenten Stützmaterial teilweise oder vollständig umfasst ist.

Bei einer weiteren Ausführungsform des weiteren Verfahrens ist es zusätzlich oder alternativ vorgesehen, dass das Bestimmen des Untersuchungsbereichs des Objekts relativ zu den Markierungen erfolgt.

Bei einer wiederum weiteren Ausführungsform des weiteren Verfahrens ist es zusätzlich oder alternativ vorgesehen, dass das Bestimmen des Untersuchungsbereichs des Objekts mit Hilfe eines tomographischen Verfahrens erfolgt, das einen dreidimensionalen Datensatz des in das transparente Stützmaterial eingebetteten Objekts liefert.

Bei einer noch weiteren Ausführungsform des weiteren Verfahrens ist es zusätzlich oder alternativ vorgesehen, dass einer der folgenden Schritte durchgeführt wird:
- das Einbringen des Objekts in das transparente Stützmaterial umfasst das Einbringen des Objekts in ein Glas und/oder in einen transparenten Kunststoff;
- das Einbringen des Objekts in das transparente Stützmaterial umfasst das Einbringen des Objekts in ein Glas und/oder in einen transparenten Kunststoff, welches bzw. welcher eine symmetrische Form aufweist; oder
- das Einbringen des Objekts in das transparente Stützmaterial umfasst das Einbringen des Objekts in ein Glas und/oder in einen transparenten Kunststoff, das bzw. der die Form eines Quaders und/oder eines Zylinders aufweist.

Bei einer Ausführungsform des weiteren Verfahrens ist es zusätzlich oder alternativ vorgesehen, dass mindestens einer der folgenden Schritte durchgeführt wird:
- das Anordnen der Markierung an dem transparenten Stützmaterial erfolgt mittels eines Lasers;
- das Anordnen der Markierung an dem transparenten Stützmaterial erfolgt mittels eines zweiten Teilchenstrahls;
- das Anordnen der Markierung an dem transparenten Stützmaterial erfolgt auf einer Oberfläche des transparenten Stützmaterials; oder
- das Anordnen der Markierung erfolgt durch eine Innengravur des transparenten Stützmaterials.

Bei einer weiteren Ausführungsform des weiteren Verfahrens ist es zusätzlich oder alternativ vorgesehen, dass mindestens einer der folgenden Schritte durchgeführt wird:
- das Bestimmen des Untersuchungsbereichs des Objekts erfolgt unter Verwendung eines Röntgenmikroskops; oder
- das Bestimmen des Untersuchungsbereichs des Objekts erfolgt unter Verwendung eines konfokalen Laser-Scanning-Mikroskops.

Bei einer noch weiteren Ausführungsform des weiteren Verfahrens ist es zusätzlich oder alternativ vorgesehen, dass das Freilegen des Untersuchungsbereichs unter Verwendung eines zweiten Teilchenstrahls erfolgt.

Bei einer wiederum weiteren Ausführungsform des weiteren Verfahrens ist es zusätzlich oder alternativ vorgesehen, dass die erfassten Bilddaten des freigelegten Untersuchungsbereichs in einer Speichereinheit gespeichert werden.

Bei einer Ausführungsform des weiteren Verfahrens ist es zusätzlich oder alternativ vorgesehen, dass die erfassten Bilddaten des freigelegten Untersuchungsbereichs als erste Bilddaten erfasst werden und wobei ferner die folgenden Schritte durchgeführt werden:
- Speichern der ersten Bilddaten in einer Speichereinheit;
- Entfernen einer Schicht des Objekts mittels eines zweiten Teilchenstrahls;
- Bewegen des ersten Teilchenstrahls über das Objekt nach dem Entfernen der Schicht des Objekts;
- Erfassen von zweiten Bilddaten mit dem Detektor durch Detektion von Wechselwirkungsteilchen und/oder Wechselwirkungsstrahlung aufgrund einer Wechselwirkung des ersten Teilchenstrahls mit dem Objekt;
- Speichern der zweiten Bilddaten in der Speichereinheit; und
- Berechnen dreidimensionaler Bilddaten mittels der ersten Bilddaten und der zweiten Bilddaten.

Bei einer weiteren Ausführungsform des weiteren Verfahrens ist es zusätzlich oder alternativ vorgesehen, dass ein Elektronenstrahl als der erste Teilchenstrahl verwendet wird.

Bei einer wiederum weiteren Ausführungsform des weiteren Verfahrens ist es zusätzlich oder alternativ vorgesehen, dass ein lonenstrahl als der zweite Teilchenstrahl verwendet wird.

Die Erfindung betrifft auch ein weiteres Teilchenstrahlgerät zur Durchführung des weiteren Verfahrens, mit
- mindestens einem ersten Strahlerzeuger zur Erzeugung eines ersten Teilchenstrahls,
- mindestens einer ersten Objektivlinse zur Fokussierung des ersten Teilchenstrahls auf das Objekt, und
- mindestens einer Steuereinheit mit einem Prozessor, in dem ein Computerprogrammprodukt mit einem ausführbaren Programmcode geladen ist, der bei Ausführung mindestens einen Schritt des weiteren Verfahrens ausführt.

Sämtliche vorgenannten Verfahren und Teilchenstrahlgeräte können beispielsweise zur Untersuchung von Materialien, insbesondere von Halbleitern verwendet werden. Mittels Röntgenstrahlung eines Röntgenmikroskops wird ein interessierender Bereich lokalisiert. Beispielsweise wird ein Riss im Material oder ein Defekt im Halbleiter lokalisiert. Beispielsweise ist der Defekt eine offene elektrische Verbindung oder ein Kurzschluss. Der lokalisierte Defekt oder der lokalisierte Riss ist der Untersuchungsbereich, der dann freigelegt und mittels des Elektronenstrahls näher untersucht wird, wie oben beschrieben. Zusätzlich ist es vorgesehen, dass mittels des lonenstrahls eine TEM-Lamelle erzeugt wird, in dem der Untersuchungsbereich angeordnet ist. Diese TEM-Lamelle kann beispielsweise aus dem Material oder dem Halbleiter entfernt werden (insbesondere durch das sogenannte "Lift-out") und dann mittels einer TEM-Untersuchung weiter untersucht werden.

Sämtliche vorgenannten Verfahren und Teilchenstrahlgeräte werden beispielsweise zur Untersuchung von Objekten im Bereich der Ölindustrie und Gasindustrie verwendet. Mittels Röntgenstrahlung eines Röntgenmikroskops werden in einem Objekt Untersuchungsbereiche identifiziert. Dabei werden beispielsweise unterschiedlichen Phasen in dem Objekt bestimmt. Im Anschluss daran erfolgt eine weitere Analyse des Objekts zur Bestimmung der gesteinsphysikalischen - also petrophysikalischen - Eigenschaften des Objekts durch Untersuchung des Objekts mittels eines Rasterelektronenmikroskops und/oder mittels eines lonenmikroskops sowie durch die aufgrund der Bestrahlung des Objekts mit Röntgenstrahlung erhaltenen Informationen, die aufgrund der im Vergleich zum Rasterelektronenmikroskop geringeren Auflösung des Röntgenmikroskops einen nur ungefähren Überblick über das Objekt liefern.

Sämtliche vorgenannten Verfahren und Teilchenstrahlgeräte werden beispielsweise zur Untersuchung von biologischen Objekten verwendet. Beispielsweise wird ein biologisches Objekt, insbesondere eine Gewebeprobe, zunächst mit einem konfokalen Laser-Scanning-Mikroskop untersucht. Im Anschluss daran kann eine für die Elektronenmikroskopie geeignete Präparation und/oder Färbung des biologischen Objekts erfolgen. Das biologische Objekt wird im Anschluss daran an einem Objekthalter fixiert. Beispielsweise wird das biologische Objekt in ein Stützmaterial eingebracht, wie dies weiter oben bereits beschrieben wurde. Das biologische Objekt ist dann lichtundurchlässig für sichtbares Licht. Mittels Röntgenstrahlung eines Röntgenmikroskops werden Untersuchungsbereiche identifiziert, beispielsweise eingefärbte synaptische Bereiche. Im Anschluss daran erfolgt eine Untersuchung mittels der beschriebenen Verfahren und Teilchenstrahlgeräte.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein

### Bezugszeichenliste

- 1: lonenstrahlgerät
- 2: lonenstrahlsäule
- 3: lonenquelle
- 4: lonenstrahlelektrode
- 5: erste Kondensorlinse

- 7: Blende
- 8: erste Elektrodeneinrichtung
- 9: zweite Elektrodeneinrichtung
- 10: erste Objektivlinse

- 12: Probenträger
- 13: Längsachse
- 14: Oberfläche
- 15: Auswerte- und Speichereinheit
- 16: Elektronensäule
- 17: Elektronenquelle
- 18: erste Elektrode
- 19: zweite Elektrode
- 20: zweite Kondensorlinse
- 21: zweite Objektivlinse
- 22: erster Detektor
- 23: zweiter Detektor
- 23A: dritter Detektor
- 24: Elektronenstrahlgerät

- 100: Objekt
- 101: transparentes Stützmaterial

- 103: Markierung
- 104: Einzelmarkierung
- 105: Untersuchungsbereich
- 106: Oberfläche des Untersuchungsbereichs
- 200: Teilchenstrahlgerät
- 300: Lasereinheit

- 400: Röntgentomographiesystem
- 401: Erzeugersystem für Röntgenstrahlung (Röntgenquelle)
- 402: Röntgenstrahlen
- 403: Rotationstisch
- 404: transmittierende Röntgenstrahlen
- 405: Detektorsystem
- 406: erster Abstand
- 407: zweiter Abstand
- 408: Interface-Anwendungen
- 409: Computersystem
- 410: Controller
- 411: Bildprozessor
- 412: Anzeigeeinheit
- 413: Eingabeeinheit
- 414: Datenspeicher
- 415: erstes Controller-Interface
- 416: zweites Controller-Interface
- 417: Scan-Parameter
- 418: Objekthalter

## Patentansprüche

1. Verfahren zur Erzeugung von Bilddaten eines Objekts (100) mittels eines Teilchenstrahls, wobei das Verfahren die folgenden Schritte aufweist:
- Anordnen mindestens einer Markierung (103, 104) in dem Objekt (100) oder in einem Stützmaterial (101), in dem das Objekt (100) eingebettet ist;
- Bestimmen mindestens eines Untersuchungsbereichs (105) des Objekts (100) mit Strahlen, wobei das Objekt (100) und/oder das Stützmaterial transparent für die Strahlen ausgebildet ist/sind, wobei das Bestimmen des Untersuchungsbereichs (105) des Objekts (100) relativ zu der Markierung (103, 104) erfolgt;
- Freilegen des Untersuchungsbereichs (105) durch Entfernen von Material des Objekts (100) und/oder des Stützmaterials (101);
- Führen eines ersten Teilchenstrahls über den freigelegten Untersuchungsbereich (106); und
- Erfassen von Bilddaten des freigelegten Untersuchungsbereichs (106) mit mindestens einem Detektor (22, 23) durch Detektion von Wechselwirkungsteilchen und/oder Wechselwirkungsstrahlung aufgrund einer Wechselwirkung des ersten Teilchenstrahls mit dem freigelegten Untersuchungsbereich (106).
**dadurch gekennzeichnet, dass** das Bestimmen des Untersuchungsbereichs (105) mit Lichtstrahlen im sichtbaren Bereich und/oder mit Röntgenstrahlen erfolgt.

2. Verfahren nach Anspruch 1, weiter umfassend einen Schritt des Einbringens des Objekts (100) in ein Stützmaterial (101), wobei das Einbringen des Objekts (100) in das Stützmaterial (101) derart erfolgt, dass das Objekt (100) von dem Stützmaterial (101) teilweise oder vollständig umfasst ist.

3. Verfahren nach einem der vorangehenden Ansprüche, wobei das Bestimmen des Untersuchungsbereichs (105) des Objekts (100) mit Hilfe eines tomographischen Verfahrens erfolgt, das einen dreidimensionalen Datensatz des Objekts (100) liefert.

4. Verfahren nach Anspruch 3, wobei der dreidimensionale Datensatz eine erste Ortsauflösung R1 hat, wobei die Bilddaten des freigelegten Untersuchungsbereichs eine zweite Ortsauflösung R2 haben, und wobei für das Verhältnis der ersten Ortsauflösung zur zweiten Ortsauflösung R1/R2 gilt: 5 < R1/R2 < 10.000.

5. Verfahren nach Anspruch 3 oder 4, wobei das tomographische Verfahren die Schritte umfasst:
- Bestrahlen des Objekts (100) mehrfach nacheinander mit Röntgenstrahlung unter unterschiedlichen Einfallswinkeln der Röntgenstrahlung auf das Objekt (100) und Detektieren einer Serie von Bildern mithilfe der jeweils durch das Objekt (100) transmittierten Röntgenstrahlung,
- Ermitteln des dreidimensionalen Datensatzes des Objekts (100) aus der Serie von Bildern durch Anwenden einer Tomographie-Auswertesoftware auf die Serie von Bildern,
- wobei das Bestimmen des Untersuchungsbereichs in dem dreidimensionalen Datensatz des Objekts (100) erfolgt,
- und wobei die Markierungen (103, 104) derart in dem Objekt (100) oder derart in dem Stützmaterial (101) angeordnet sind, dass sie in dem dreidimensionalen Datensatz des Objekts (100) erkennbar sind.

6. Verfahren nach einem der vorangehenden Ansprüche, wobei die Markierungen (103, 104) derart angeordnet werden, dass mindestens ein Teil der Markierungen (103, 104) auch nach dem Freilegen des Untersuchungsbereichs (105) vorhanden sind.

7. Verfahren nach Anspruch 6, wobei die Markierungen (103, 104) derart angebracht sind, dass ein Teil der nach dem Freilegen des Untersuchungsbereichs (105) vorhandenen Markierungen (103, 104) in den durch Detektion von Wechselwirkungsteilchen oder Wechselwirkungsstrahlung aufgrund einer Wechselwirkung des ersten Teilchenstrahls mit dem freigelegten Untersuchungsbereich (105) gewonnenen Bilddaten erkennbar sind.

8. Verfahren nach einem der Ansprüche 2 bis 7, wobei einer der folgenden Schritte durchgeführt wird:
- das Einbringen des Objekts (100) in das Stützmaterial (101) umfasst das Einbringen des Objekts (100) in ein Glas und/oder in einen transparenten Kunststoff;
- das Einbringen des Objekts (100) in das Stützmaterial (101) umfasst das Einbringen des Objekts (100) in ein Glas und/oder in einen transparenten Kunststoff, welches bzw. welcher eine symmetrische Form aufweist; oder
- das Einbringen des Objekts (100) in das transparente Stützmaterial (101) umfasst das Einbringen des Objekts (100) in ein Glas und/oder in einen transparenten Kunststoff, das bzw. der die Form eines Quaders und/oder eines Zylinders aufweist.

9. Verfahren nach einem der vorangehenden Ansprüche, wobei mindestens einer der folgenden Schritte durchgeführt wird:
- das Anordnen der Markierung (103, 104) in dem Objekt (100) oder dem Stützmaterial (101) erfolgt mittels eines Lasers;
- das Anordnen der Markierung (103, 104) in dem Objekt (100) oder dem Stützmaterial (101) erfolgt mittels eines zweiten Teilchenstrahls;
- das Anordnen der Markierung (103, 104) in dem Objekt (100) oder dem Stützmaterial (101) erfolgt auf einer Oberfläche des Objekts (100) oder des Stützmaterials (101);
- das Anordnen der Markierung (103, 104) erfolgt durch eine Innengravur des Objekts (100) oder des Stützmaterials (101);
- das Bestimmen des Untersuchungsbereichs (105) des Objekts (100) erfolgt unter Verwendung eines Röntgenmikroskops;
- das Bestimmen des Untersuchungsbereichs (105) des Objekts (100) erfolgt unter Verwendung eines konfokalen Laser-Scanning-Mikroskops;
- das Freilegen des Untersuchungsbereichs (105) erfolgt unter Verwendung eines zweiten Teilchenstrahls; oder
- die erfassten Bilddaten des freigelegten Untersuchungsbereichs (106) werden in einer Speichereinheit (15) gespeichert.

10. Verfahren nach Anspruch 1, wobei die erfassten Bilddaten des freigelegten Untersuchungsbereichs (106) als erste Bilddaten erfasst werden und wobei ferner die folgenden Schritte durchgeführt werden:
- Speichern der ersten Bilddaten in einer Speichereinheit (15);
- Entfernen einer Schicht des Objekts (100) mittels eines zweiten Teilchenstrahls;
- Bewegen des ersten Teilchenstrahls über das Objekt (100) nach dem Entfernen der Schicht des Objekts (100);
- Erfassen von zweiten Bilddaten mit dem Detektor (22, 23) durch Detektion von Wechselwirkungsteilchen und/oder Wechselwirkungsstrahlung aufgrund einer Wechselwirkung des ersten Teilchenstrahls mit dem Objekt (100);
- Speichern der zweiten Bilddaten in der Speichereinheit (15); und
- Berechnen dreidimensionaler Bilddaten mittels der ersten Bilddaten und der zweiten Bilddaten.

11. Verfahren nach einem der vorangehenden Ansprüche, wobei ein Elektronenstrahl als der erste Teilchenstrahl verwendet wird.

12. Verfahren nach Anspruch 9, wobei ein lonenstrahl als der zweite Teilchenstrahl verwendet wird.

13. Verfahren nach einem der vorangehenden Ansprüche, wobei als Untersuchungsbereich (105) ein Riss eines Materials oder ein Defekt eines Halbleiters bestimmt wird.

14. Verfahren nach Anspruch 9 oder 12, wobei
- eine TEM-Lamelle, welche den Untersuchungsbereich (105) aufweist, unter Verwendung des zweiten Teilchenstrahls erzeugt wird;
- die TEM-Lamelle mittels des ersten Teilchenstrahls bestrahlt wird; und wobei
- durch die TEM-Lamelle transmittierende Teilchen des ersten Teilchenstrahls mit einem weiteren Detekor detektiert werden.

15. Verfahren nach Anspruch 1, wobei
- das Objekt (100) zunächst mit einem konfokalen Laser-Scanning-Mikroskop untersucht wird,
- dann das Objekt (100) eingefärbt und fixiert wird, und wobei
- dann der Untersuchungsbereich (105) unter Verwendung eines Röntgenmikroskops bestimmt wird, der Untersuchungsbereich (105) freigelegt wird und die Bilddaten des freigelegten Untersuchungsbereichs (106) erfasst werden.

## Claims

1. Method for generating image data of an object (100) by means of a particle beam, the method comprising the following steps:
- arranging at least one marking (103, 104) in the object (100) or in a support material (101) in which the object (100) is embedded;
- determining at least one examination region (105) of the object (100) using beams, wherein the object (100) and/or the support material is/are embodied in a manner transparent to the beams, wherein the examination region (105) of the object (100) is determined relative to the marking (103, 104);
- exposing the examination region (105) by removing material of the object (100) and/or of the support material (101);
- guiding a first particle beam over the exposed examination region (106); and
- acquiring image data of the exposed examination region (106) using at least one detector (22, 23) by detecting interaction particles and/or interaction radiation due to an interaction of the first particle beam with the exposed examination region (106),
**characterized in that** the examination region (105) is determined using light beams in the visible range and/or using x-ray beams.

2. Method according to Claim 1, further comprising a step of introducing the object (100) into a support material (101), with the object (100) being introduced into the support material (101) in such a way that the object (100) is partly or completely surrounded by the support material (101).

3. Method according to any of the preceding claims, wherein the examination region (105) of the object (100) is determined with the aid of a tomographic method which supplies a three-dimensional data record of the object (100).

4. Method according to Claim 3, wherein the three-dimensional data record has a first spatial resolution R1, wherein the image data of the exposed examination region have a second spatial resolution R2, and wherein the following applies to the ratio of the first spatial resolution to the second spatial resolution R1/R2: 5 < R1/R2 < 10 000.

5. Method according to Claim 3 or 4, wherein the tomographic method comprises the following steps:
- irradiating the object (100) a number of times in succession using x-ray radiation at different angles of incidence of the x-ray radiation on the object (100) and detecting a sequence of images with the aid of the x-ray radiation respectively transmitted through the object (100),
- establishing the three-dimensional data record of the object (100) from the sequence of images by applying tomography evaluation software to the sequence of images,
- wherein the examination region is determined in the three-dimensional data record of the object (100),
- and wherein the markings (103, 104) are arranged in the object (100) or in the support material (101) in such a way that they are identifiable in the three-dimensional data record of the object (100).

6. Method according to any of the preceding claims, wherein the markings (103, 104) are arranged in such a way that at least some of the markings (103, 104) are still present even after the examination region (105) is exposed.

7. Method according to Claim 6, wherein the markings (103, 104) are attached in such a way that some of the markings (103, 104) present after exposing the examination region (105) are identifiable in the image data obtained by detecting interaction particles or interaction radiation due to an interaction of the first particle beam with the exposed examination region (105).

8. Method according to any of Claims 2 to 7, wherein one of the following steps is carried out:
- the introduction of the object (100) into the support material (101) comprises the introduction of the object (100) into a glass and/or a transparent plastic;
- the introduction of the object (100) into the support material (101) comprises the introduction of the object (100) into a glass and/or a transparent plastic, which has a symmetric form; or
- the introduction of the object (100) into the transparent support material (101) comprises the introduction of the object (100) into a glass and/or a transparent plastic, which has the shape of a cuboid and/or a cylinder.

9. Method according to any of the preceding claims, wherein at least one of the following steps is carried out:
- the marking (103, 104) is arranged in the object (100) or in the support material (101) by means of a laser;
- the marking (103, 104) is arranged in the object (100) or in the support material (101) by means of a second particle beam;
- the marking (103, 104) is arranged in the object (100) or in the support material (101) on a surface of the object (100) or of the support material (101);
- the marking (103, 104) is arranged by internal engraving of the object (100) or of the support material (101);
- the examination region (105) of the object (100) is determined using an x-ray microscope;
- the examination region (105) of the object (100) is determined using a confocal laser scanning microscope;
- the examination region (105) is exposed using a second particle beam; or
- the acquired image data of the exposed examination region (106) is stored in a storage unit (15).

10. Method according to Claim 1, wherein the acquired image data of the exposed examination region (106) are acquired as first image data and wherein furthermore the following steps are carried out:
- storing the first image data in a storage unit (15);
- removing a layer of the object (100) by means of a second particle beam;
- moving the first particle beam over the object (100) after removing the layer of the object (100);
- acquiring second image data using the detector (22, 23) by detecting interaction particles and/or interaction radiation due to an interaction of the first particle beam with the object (100);
- storing the second image data in the storage unit (15); and
- calculating three-dimensional image data by means of the first image data and the second image data.

11. Method according to any of the preceding claims, wherein an electron beam is used as the first particle beam.

12. Method according to Claim 9, wherein an ion beam is used as the second particle beam.

13. Method according to any of the preceding claims, wherein a crack in a material or a defect of a semiconductor is determined as examination region (105).

14. Method according to Claim 9 or 12, wherein
- a TEM lamella, which comprises the examination region (105), is generated using the second particle beam;
- the TEM lamella is irradiated by the first particle beam; and wherein
- particles of the first particle beam transmitted through the TEM lamella are detected by a further detector.

15. Method according to Claim 1, wherein
- the object (100) is initially examined using a confocal laser scanning microscope,
- the object (100) is thereupon stained and fixed, and wherein
- thereupon the examination region (105) is determined using an x-ray microscope, the examination region (105) is exposed and the image data of the exposed examination region (106) are acquired.

## Revendications

1. Procédé de génération de données d'image d'un objet (100) au moyen d'un faisceau de particules, le procédé comprenant les étapes suivantes :
- placer au moins un marqueur (103, 104) dans l'objet (100) ou dans un matériau de support (101) dans lequel l'objet (100) est incorporé ;
- déterminer au moins une zone d'examen (105) de l'objet (100) à l'aide de rayons, l'objet (100) et/ou le matériau de support étant transparents aux rayons, la détermination de la zone d'examen (105) de l'objet (100) étant effectuée par rapport au marqueur (103, 104) ;
- exposer la zone d'examen (105) par enlèvement de matériau de l'objet (100) et/ou du matériau de support (101) ;
- guider un premier faisceau de particules sur la zone d'examen exposée (106) ; et
- acquérir des données d'image de la zone d'examen exposée (106) à l'aide d'au moins un détecteur (22, 23) par détection de particules d'interaction et/ou d'un rayonnement d'interaction en raison d'une interaction du premier faisceau de particules avec la zone d'examen exposée (106),
**caractérisé en ce que** la détermination de la zone d'examen (105) est effectuée à l'aide de faisceaux lumineux dans le domaine visible et/ou à l'aide de rayons X.

2. Procédé selon la revendication 1, comprenant en outre une étape d'introduction de l'objet (100) dans un matériau de support (101), l'introduction de l'objet (100) dans le matériau de support (101) étant effectuée de manière à ce que l'objet (100) soit partiellement ou complètement entouré par le matériau de support (101).

3. Procédé selon l'une des revendications précédentes, la détermination de la zone d'examen (105) de l'objet (100) étant effectuée à l'aide d'un procédé tomographique qui fournit un ensemble de données tridimensionnelles de l'objet (100).

4. Procédé selon la revendication 3, l'ensemble de données tridimensionnelles présentant une première résolution spatiale R1, les données d'image de la zone d'examen exposée présentant une deuxième résolution spatiale R2, et le rapport de la première résolution spatiale à la deuxième résolution spatiale R1/R2 satisfaisant à : 5 < R1/R2 < 10000.

5. Procédé selon la revendication 3 ou 4, le procédé tomographique comprenant les étapes suivantes :
- irradier l'objet (100) plusieurs fois de suite avec des rayons X à différents angles d'incidence des rayons X sur l'objet (100) et détecter une série d'images à l'aide des rayons X transmis à travers l'objet (100),
- déterminer l'ensemble de données tridimensionnelles de l'objet (100) à partir de la série d'images par application d'un logiciel d'évaluation de tomographie à la série d'images,
- la détermination de la zone d'examen étant effectuée dans l'ensemble de données tridimensionnelles de l'objet (100),
- et les marqueurs (103, 104) étant placés dans l'objet (100) ou dans le matériau de support (101) de manière à être reconnaissables dans l'ensemble de données tridimensionnelles de l'objet (100).

6. Procédé selon l'une des revendications précédentes, les marqueurs (103, 104) étant placés de manière à ce qu'au moins une partie des marqueurs (103, 104) soient également présents après que la zone d'examen (105) a été exposée.

7. Procédé selon la revendication 6, les marqueurs (103, 104) étant appliqués de manière à ce qu'une partie des marquages (103, 104) présents après que la zone d'examen (105) a été exposée soient reconnaissables dans les données d'image obtenues par la détection de particules d'interaction ou le rayonnement d'interaction en raison d'une interaction du premier faisceau de particules avec la zone d'examen exposée (105).

8. Procédé selon l'une des revendications 2 à 7, l'une des étapes suivantes étant effectuée :
- l'introduction de l'objet (100) dans le matériau de support (101) comprend l'introduction de l'objet (100) dans un verre et/ou dans une matière synthétique transparente ;
- l'introduction de l'objet (100) dans le matériau de support (101) comprend l'introduction de l'objet (100) dans un verre et/ou dans une matière synthétique transparente qui a une forme symétrique ; ou
- l'introduction de l'objet (100) dans le matériau de support transparent (101) comprend l'introduction de l'objet (100) dans un verre et/ou dans une matière synthétique transparente qui a la forme d'un parallélépipède et/ou d'un cylindre.

9. Procédé selon l'une des revendications précédentes, l'une au moins des étapes suivantes étant effectuée :
- le placement du marqueur (103, 104) dans l'objet (100) ou le matériau de support (101) est effectué au moyen d'un laser ;
- le placement du marqueur (103, 104) dans l'objet (100) ou le matériau de support (101) est effectué à l'aide d'un deuxième faisceau de particules ;
- le placement du marqueur (103, 104) dans l'objet (100) ou le matériau de support (101) est effectué sur une surface de l'objet (100) ou du matériau de support (101) ;
- le placement du marqueur (103, 104) est effectué par gravure interne de l'objet (100) ou du matériau de support (101) ;
- la détermination de la zone d'examen (105) de l'objet (100) est effectuée à l'aide d'un microscope à rayons X ;
- la détermination de la zone d'examen (105) de l'objet (100) est effectuée à l'aide d'un microscope confocal à balayage laser ;
- l'exposition de la zone d'examen (105) est effectuée à l'aide d'un deuxième faisceau de particules ; ou
- les données d'image acquises de la zone d'examen exposées (106) sont mémorisées dans une unité de mémorisation (15).

10. Procédé selon la revendication 1, les données d'image acquises de la zone d'examen exposées (106) sont acquises comme premières données d'image et les étapes suivantes étant réalisées :
- mémoriser les premières données d'image dans une unité de mémorisation (15) ;
- enlever une couche de l'objet (100) à l'aide d'un deuxième faisceau de particules ;
- déplacer le premier faisceau de particules sur l'objet (100) après avoir enlevé la couche de l'objet (100) ;
- acquérir des deuxième données d'image à l'aide du détecteur (22, 23) par détection de particules d'interaction et/ou de rayonnement d'interaction en raison d'une interaction du premier faisceau de particules avec l'objet (100) ;
- mémoriser les deuxièmes données d'image dans l'unité de mémorisation (15) ; et
- calculer des données d'image tridimensionnelles à l'aide des premières données d'image et des deuxièmes données d'image.

11. Procédé selon l'une des revendications précédentes, un faisceau d'électrons étant utilisé comme premier faisceau de particules.

12. Procédé selon la revendication 9, un faisceau d'ions étant utilisé comme deuxième faisceau de particules.

13. Procédé selon l'une des revendications précédentes, une fissure dans un matériau ou un défaut dans un semi-conducteur étant déterminé comme zone d'examen (105).

14. Procédé selon la revendication 9 ou 12,
- une lamelle TEM, qui comporte la zone d'examen (105), étant générée à l'aide du deuxième faisceau de particules ;
- la lamelle TEM étant irradiée avec le premier faisceau de particules ; et
- des particules du premier faisceau de particules transmises à travers la lamelle TEM étant détectées à l'aide d'un autre détecteur.

15. Procédé selon la revendication 1,
- l'objet (100) étant d'abord examiné à l'aide d'un microscope confocal à balayage laser,
- puis l'objet (100) étant coloré et fixé, et
- ensuite la zone d'examen (105) étant déterminée à l'aide d'un microscope à rayons X, la zone d'examen (105) étant exposée et les données d'image de la zone d'examen exposée (106) étant acquises.
